(19) Europäisches Patentamt
European Patent Office
Office européen des brevets

(11) Numéro de publication: **0 138 669**
**B1**

(12) **FASCICULE DE BREVET EUROPÉEN**

(45) Date de publication du fascicule du brevet: **10.08.88**

(51) Int. Cl.⁴: **C 07 F 7/12**, C 01 B 33/04

(21) Numéro de dépôt: **84401846.5**

(22) Date de dépôt: **18.09.84**

(54) **Procédé de fabrication de silane à partir de méthyldichlorosilane et de chlorosilanes.**

(30) Priorité: **28.09.83 FR 8315405**

(43) Date de publication de la demande: **24.04.85 Bulletin 85/17**

(45) Mention de la délivrance du brevet: **10.08.88 Bulletin 88/32**

(84) Etats contractants désignés: **AT BE CH DE FR GB IT LI NL SE**

(56) Documents cité:
**EP-A-0 063 067**
**EP-A-0 117 799**
**FR-A-1 457 139**
**FR-A-2 119 477**
**FR-A-2 261 977**
**US-A-2 834 648**

(73) Titulaire: **RHONE- POULENC CHIMIE, 25, quai Paul Doumer, F-92408 Courbevoie Cédex (FR)**

(72) Inventeur: **Lepage, Jean- Luc, 81, chemin de Chavril, F-69110- Sainte- Foy- Les- Lyon (FR)**
Inventeur: **Soula, Gérard, 33, rue Nungesser, F-69330 Meyzieu (FR)**

(74) Mandataire: **Esson, Jean- Pierre, Rhône- Poulenc Interservices Service Brevets Chimie 25, quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 138 669 B1

LIBER, STOCKHOLM 1988

## Description

La présente invention concerne un procédé de fabrication de silane à partir de méthyldichlorosilane et de chlorosilanes.

Elle a trait plus particulièrement à un procédé de fabrication de silane à partir de méthyldichlorosilane et de trichlorosilane et/ou de tétrachlorosilane.

Le silane constitue une matière première de choix pour obtenir, par décomposition, du silicium utilisable notamment dans les dispositifs à semi-conducteurs ou photovoltaïques (cellules solaires).

On sait qu'il est possible d'obtenir du silane par dismutation de trichlorosilane en présence de divers catalyseurs selon les réactions équilibrées suivantes :

(1) $2HSiCl_3 \rightleftarrows H_2SiCl_2 + SiCl_4$
(2) $2H_2SiCl_2 \rightleftarrows HSiCl_3 + H_3SiCl$
(3) $2H_3SiCl \rightleftarrows SiH_4 + H_2SiCl_2$

soit globalement

(4) $2HSiCl_3 \rightleftarrows SiH_4 + 3SiCl_4$

Ainsi, selon le brevet français n° 2 261 977, il a été proposé de produire du silane par réaction de dismutation ou de redistribution de $HSiCl_3$ dans un lit de résine solide d'échange d'anions à une température suffisante pour provoquer la vaporisation, hors de la zone de réaction, des produits à plus faible point d'ébullition de la réaction et pour provoquer la condensation du produit liquide à point supérieur d'ébullition résultant de la réaction, $SiCl_4$, et son écoulement loin de la zone de réaction. On maintient la température au sommet du lit à une valeur supérieure au point d'ébullition de $SiH_4$ et inférieure au point d'ébullition de $H_3SiCl$ et l'on récupère du lit $SiH_4$ comportant de petites quantités d'hydrogéno-chlorosilanes qui nécessitent une séparation ultérieure.

Ce procédé extrêmement complexe et délicat à mettre en oeuvre opère soit une distillation continue des produits des différentes réactions équilibrées (1) (2) et (3) et permet une certaine séparation des divers produits en présence soit une purification de $SiH_4$ sur piège à charbon.

Par ailleurs, on connaît différents procédés de fabrication de dichlorosilane par dismutation du trichlorosilane en présence de catalyseurs divers. Parmi les catalyseurs connus dans ce but, on a proposé notamment: les amines tertiaires de formule générale NR'R"R'" dans laquelle R', R", R'" sont des radicaux alcoyles identiques ou différents (brevet français n° 1 111 925), les chlorhydrates d'amines (brevet français n° 2 096 605), les pyrrolidones N-substituées (brevet français n° 2 290 447) et les tétraalcoylurées (brevet français n° 2 290 448).

On connaît également un procédé de fabrication de silane par réaction de dismutation et/ou de redistribution de HSi $Cl_3$, décrit dans le brevet européen n° 63 067 de la demanderesse. Ce procédé consiste à utiliser un catalyseur contenant un groupe oxo-amine, permettant ainsi de remplacer les distillations successives du procédé du brevet français 2 261 977 par une solubilisation sélective des composés vaporisés par la solution de catalyseur pour ainsi recycler les chlorosilanes solubilisés et récupérer le silane insoluble.

La demanderesse a mis au point un nouveau procédé de fabrication de silane qui permet notamment d'obtenir celui-ci très aisément et avec une excellente sélectivité sans avoir recours à une série de distillations successives comme dans le procédé selon le brevet français n° 2 261 977 ou une solubilisation sélective comme dans le brevet EP 63 067. Le procédé selon la présente invention permet en outre d'obtenir le silane avec une excellente productivité à partir de matières premières facilement accessibles au plan industriel.

La présente invention concerne en effet un procédé de fabrication de silane à partir de méthyldichlorosilane et de trichlorosilane et/ou de tétrachlorosilane caractérisé en ce que:

A) dans une première étape, on opère la redistribution entre le méthyldichlorosilane et le trichlorosilane et/ou le tétrachlorosilane en présence d'un catalyseur pour former du méthyltrichlorosilane et du dichlorosilane,

B) dans une deuxième étape, après séparation du milieu réactionnel, le dichlorosilane formé au cours de la première étape est dismuté en présence d'un catalyseur pour former le silane et le trichlorosilane;

le silane formé est récupéré et le trichlorosilane est éventuellement recyclé dans la première étape.

Le catalyseur mis en oeuvre pour la réaction de redistribution de la première étape et la réaction de dismutation de la deuxième étape peut être identique ou différent, on préfère toutefois utiliser un catalyseur identique, celui-ci est choisi parmi:

- les sels d'ammonium quaternaire répondant à la formule $R_4'NY$ et les sels de phosphonium quaternaire répondant à la formule $R_4'PY$, formules dans lesquelles R' identiques ou différents représentent un radical hydrocarboné monovalent et Y un halogène,
- les amines tertiaires de formule générale NR'R"R'" dans laquelle R'R"R'" sont des radicaux hydrocarbonés monovalents identiques ou différents,
- les résines échangeuses d'ions comportant des groupements amine tertiaire ou ammonium quaternaire,
- les systèmes catalytiques comportant un sel minéral ionique $M^+A^-$ et un composé complexant le cation $M^+$ dudit sel.

On décrit ci-après les différents types de catalyseurs que l'on peut mettre en oeuvre selon le procédé de l'invention.

Les sels d'ammonium quaternaires mis en oeuvre selon l'invention répondent à la formule $R_4'NY$ et les sels de phosphonium quaternaire mis en oeuvre selon l'invention répondent à la formule $R_4'PY$, formules dans lesquelles R' identiques ou différents représentent un radical hydrocarboné monovalent et Y un halogène.

En particulier, R' peut être tout radical hydrocarboné monovalent, par exemple, un des radicaux alkyles tels qu'un radical méthyle, éthyle, isopropyle, butyle, hexyle-secondaire, 2-éthylhexyle ou octadécyle, un des radicaux cycloalkyles tels qu'un radical cyclohexyle ou cyclopentyle, un des radicaux aliphatiquement non-saturés tels qu'un radical vinyle, allyle, hexényle, cyclopentényle ou butadiényle ou un des radicaux contenant des groupes aryles tels qu'un radical phényle, tolyle, benzyle, biphényle, ou naphtyle.

R' peut également être tout radical halohydrocarboné monovalent, par exemple un des radicaux haloalkyles tels qu'un radical 3-chloropropyle, 3-3-3-trifluoropropyle ou 4-bromohexyle, un radical halocycloalkyle tel qu'un radical bromocyclopentyle ou difluorocyclohexyle, un des radicaux aliphatiquement non-saturés tels qu'un radical chloroallyle ou chlorocyclohexényle et un des radicaux contenant des groupes aryles tels qu'un radical chlorophényle, dibromophényle, α, α, α-trifluorotolyle ou bromonaphtyle.

Y peut être tout halogène, par exemple le chlore, le brome ou l'iode.

Les amines tertiaires mis en oeuvre selon l'invention répondent à la formule générale NR'R''R''' dans laquelle R', R'' et R''' sont des radicaux hydrocarbonés monovalents identiques ou différents.

En particulier, R', R'', R''' peuvent être tout radical alkyl, aryle, cycloalkyle, alkylaryle, alkylcycloalkyle, alcényle, alkylène (lorsque R' et R'' sont reliés) généralement ces radicaux ont un nombre d'atome de carbone inférieur à 22.

Les amines tertiaires les plus couramment utilisés sont notamment les suivantes: la tri-n-propylamine, la triisopropylamine, la diisopropyl-n-éthylamine, la tri-n-butylamine, la triisobutylamine, la tri-sec-butylamine, la tri-n-pentylamine, la di-n-butyléthylamine, la di-isobutyléthylamine, la di-2-éthylbutylméthylamine, la di-n-octylméthylamine, la di-2-éthylhexylméthylamine, la dilaurylméthylamine, la triundécylamine, la trioctadécylamine, la n-octadécyl-n-propyléthylamine, la di-n-butylphénylamine, la triphénylamine, la tris(biphényl)amine, la 2-naphtyldi-n-butylamine, la tritolylamine, la trixylylamine, la tris(phénylméthylphényl)amine, la tris(2-phényléthyl)amine, la tris-(8-phényloctyl)amine, la tricyclohexylamine, la tricyclooctylamine, la tris(4-méthyl-cyclohexyl)amine, la tris(2-cyclohexyléthyl)amine, la tris(3-n-butényl)amine, la triisobuténylamine, la diallyl-n-butylamine, la n-n-propylpipéridine, la n-iso-butylpyrrolidine, la n-iso-butylmorpholine, etc..

Le catalyseur de l'invention peut égalemant être constitué par une résine échangeuse d'ions insoluble dans les produits mis en oeuvre dans la réaction et comportant des groupes amine, tertiaire, ou ammomium quaternaire dans lesquels les radicaux alkylamine ou alkylammonium contiennent de préférence de 1 à 8 atomes de carbone, ces groupes étant liés par un atome de carbone à la structure de la resine.

Le système catalytique comportant un sel minéral ionique $M^+A^-$ et un composé complexant le cation $M^+$ dudit sel est tel que le sel minéral ionique $M^+A^-$ ne doit pas réagir avec les divers produits présents dans le milieu réactionnel.

Les sels mineraux ioniques de formule $M^+A^-$ sont notamment choisis parmi ceux dans lesquels $M^+$ représente un alcalin, un alcalino-terreux ou l'ammonium et de préférence : $Li^+$, $Na^+$ , $K^+$, $Ca^{++}$, $NH_4^+$ et ceux dans lesquels $A^-$ represente un halogène, $SCN^-$, $CN^-$, $CO_3^{--}$ et de préférence: $Cl^-$, $Br^-$, $I^-$, $F^-$.

Bien que cela ne soit pas complètement démontré, il apparaît que le composé complexant le cation $M^+$ du sel minéral ionique permet la solubilisation et la dissociation au moins partielle du sel dans le milieu réactionnel, l'activité catalytique de l'anion $A^-$ étant de ce fait fortement exaltée.

Selon un premier mode de mise en oeuvre particulier de l'invention, le composé complexant le cation du sel minéral ionique est un agent séquestrant de formule:

$$[N\text{-}(CHR_1\text{-}CHR_2\text{-}O\text{-}(CHR_3\text{-}CHR_4\text{-}O)_n\text{-}R_5)_3] \quad (I)$$

dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_m H_{2m}-\varnothing$ ou $C_m H_{2m+1}-\varnothing-$, où m est compris entre 1 et 12 ($1<m<12$).

Selon un deuxième mode de mise en oeuvre particulier de l'invention, le composé complexant est un polyéther macrocyclique ayant de 15 à 30 atomes dans le cycle et constitué de 4 à 10 unités -O-X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayant de 1 à 4 atomes de carbone, un des X pouvant être $-CHR_6-CHR_8-CR_9R_7-$ quand les unités -O-X comprennent le groupement $-O-CHR_6-CHR_7-$.

Selon un troisième mode de mise en oeuvre particulier de l'invention, le composé complexant est un composé macrocyclique ou bicyclique de formule générale IIa ou IIb

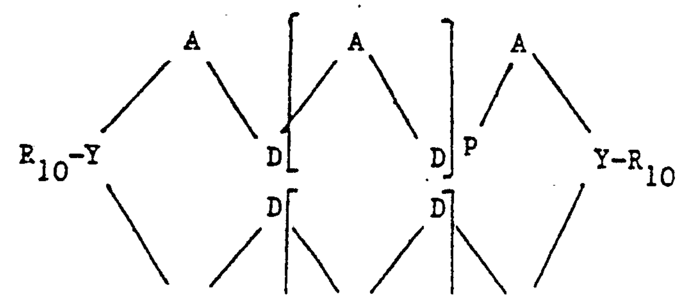

(IIa)

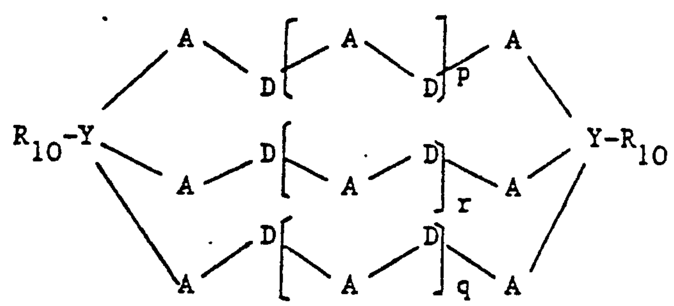

(IIb)

dans lesquelles:

- Y représente N ou P
- A représente un groupement alkylène ayant de 1 à 3 atomes de carbone
- D représente O, S ou N-$R_{11}$ où $R_{11}$ représente un radical alkyle ayant de 1 à 6 atomes de carbone
- $R_{10}$ représente un radical alkyle ayant de 1 à 6 atomes de carbone, p, q et r identiques ou différents sont des nombres entiers compris entre 1 et 5.

Selon un quatrième mode de mise en oeuvre particulier de l'invention, on utilise un mélange d'au moins deux des composés complexant définis ci-dessus.

Selon un cinquième mode de mise en oeuvre particulier de l'invention, on utilise comme composé complexant les agents séquestrants, les polyéthers macrocycliques (encore nommés "Ethers Couronne") et les composés macrocycliques ou bicycliques (encore nommés "Cryptants") greffés sur des supports polymères organiques réticulés. Ces composés complexants greffés sont notamment ceux décrits dans la demande de brevet européen n° 46 706 lorsqu'il s'agit des agents séquestrants greffés et dans l'article Angew. Chem. Int. Ed. Engl. 18, 421 - 429 (1979) lorsqu'il s'agit des Ethers Couronne ou des Cryptants greffés.

Les agents séquestrants greffés décrits dans la demande de brevet européen n° 46 706 sont caractérisés en ce qu'ils sont constitués par un support polymère organique réticulé et par une pluralité de groupes fonctionnels, fixés sur ladit support, de formule générale:

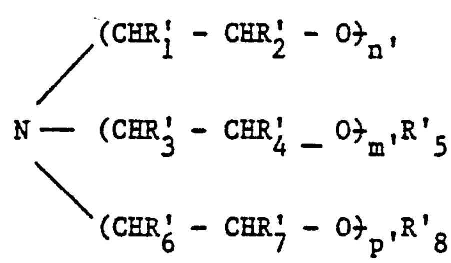

(III)

dans laquelle $R_1'$, $R_2'$, $R_3'$, $R_4'$, $R_6'$ et $R_7'$ identiques ou différents sont chacun un atome d'hydrogène ou un radical alkyle ayant de 1 à 4 atomes de carbone, $R_5'$ et $R_8'$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$avec q' supérieur ou égal à 1 et inférieur ou égal à environ 12, et dans laquelle n', m', et p' identiques ou différents sont supérieure ou égaux à 1 et inférieurs ou égaux à 10.

Selon un mode de réalisation préférentiel de l'invention, on utilise un agent séquestrant de formule (I) dans laquelle $R_1$, $R_2$, $R_3$ et $R_4$ représentent un atome d'hydrogène ou un radical methyle, $R_5$ et n ayant la signification précédente.

Parmi ces derniers, on préfére encore plus particulièrement mettre en oeuvre les agents séquestrants pour lesquels n est supérieur ou égal à 0 et inférieur ou égal à 6 at pour lesquels $R_5$ représente un radical alkyle

ayant de 1 à 4 atomes de carbone.

On peut citer:

- la tris(oxa-3 butyl)amine de formule: $N\text{-}(\text{-}CH_2\text{-}CH_2\text{-}O\text{-}CH_3)_3$
- la tris(dioxa-3,6 heptyl)amine de formule: $N\text{-}(\text{-}CH_2\text{-}CH_2\text{-}O\text{-}CH_2\text{-}CH_2\text{-}O\text{-}CH_3)_3$
- la tris(trioxa-3,6,9 décyl)amine de formule: $N\text{-}(\text{-}CH_2\text{-}CH_2\text{-}O\text{-}CH_2\text{-}CH_2\text{-}O\text{-}CH_2\text{-}CH_2\text{-}O\text{-}CH_3)_3$
- la tris(dioxa-3,6 octyl)amine de formule: $N\text{-}(\text{-}CH_2\text{-}CH_2\text{-}O\text{-}CH_2\text{-}CH_2\text{-}O\text{-}C_2H_5)_3$
- la tris(trioxa-3,6,9 undécyl)amine de formule: $N\text{-}(\text{-}CH_2\text{-}CH_2\text{-}O\text{-}CH_2\text{-}CH_2\text{-}O\text{-}CH_2\text{-}CH_2\text{-}O\text{-}C_2H_5)_3$
- la tris(dioxa-3,6 nonyl)amine de formule: $N\text{-}(\text{-}CH_2\text{-}CH_2\text{-}O\text{-}CH_2\text{-}CH_2\text{-}O\text{-}C_3H_7)_3$
- la tris(trioxa-3,6,9 dodécyl)amine de formule: $N\text{-}(\text{-}CH_2\text{-}CH_2\text{-}O\text{-}CH_2\text{-}CH_2\text{-}O\text{-}CH_2\text{-}CH_2\text{-}O\text{-}C_3H_7)_3$
- la tris(dioxa-3,6 décyl)amine de formule: $N\text{-}(\text{-}CH_2\text{-}CH_2\text{-}O\text{-}CH_2\text{-}CH_2\text{-}O\text{-}C_4H_9)_3$
- la tris(trioxa-3,6,9 tridécyl)amine de formule: $N\text{-}(\text{-}CH_2\text{-}CH_2\text{-}O\text{-}CH_2\text{-}CH_2\text{-}O\text{-}CH_2\text{-}CH_2\text{-}O\text{-}C_4H_9)_3$
- la tris(tetra-oxa-3,6,9,12 tridecyl)amine de formule: $N\text{-}(\text{-}CH_2\text{-}CH_2\text{-}O\text{-}(\text{-}CH_2\text{-}CH_2\text{-}O)_3\text{-}CH_3)_3$
- la tris(hexa-oxa-3,6,9,12,15,18 nonadecyl)amine de formule: $N\text{-}(\text{-}CH_2\text{-}CH_2\text{-}O\text{-}(CH_2\text{-}CH_2\text{-}O\text{-})_{\text{-}5}\ CH_3)_3$
- la tris(dioxa-3,6 méthyl-4 heptyl)amine de formule: $N\text{-}(\text{-}CH_2\text{-}CH_2\text{-}OCH\text{-}(CH_3)\text{-}CH_2\text{-}O\text{-}CH_3)_3$
- la tris(dioxa-3,6 diméthyl-2,4 heptyl)amine de formule: $N\text{-}(\text{-}CH_2CH\text{-}(CH_3)\text{-}OCH(CH_3)\text{-}CH_2\text{-}O\text{-}CH_3)_3$.

Les amines utilisées sont connues en tant que telles dans l'art antérieur. C'est ainsi que le brevet français 1 302 365 cite l'obtention des amines tertiaires $N\text{-}(\text{-}CH_2\text{-}CH_2\text{-}O\text{-}CH_3)_3$ et $N\text{-}(\text{-}CH_2\text{-}CH_2\text{-}O\text{-}CH_2\text{-}CH_2\text{-}O\text{-}CH_3)_3$ comme sous produits de la synthèse des amines primaires et secondaires correspondantes, ces amines primaires et secondaires étant des produits intéressants comme intermédiaires en vue de la synthèse de substances pharmaceutiques, comme inhibiteurs de corrosion, comme intermédiaires en vue de la synthèse de produits chimiques intéressants en agriculture et comme émulsifiants. Il n'est pas inutile de souligner que le domaine d'application des composés obtenus dans le brevet 1 302 365 précité simultanément aux amines utilisées dans le procédé objet de la présente demande est totalement étranger au domaine de l'invention.

Les polyéthers macrocycliques qui peuvent être mis en oeuvre dans le procédé selon l'invention sont connus sous l'appellation générale d'"éthers couronnes" et sont décrits dans le brevet français 6 943 879 publié sous le numéro 2 026 481.

On peut citar comme exemples d'éthers couronnes pouvant être utilisés selon l'invention:

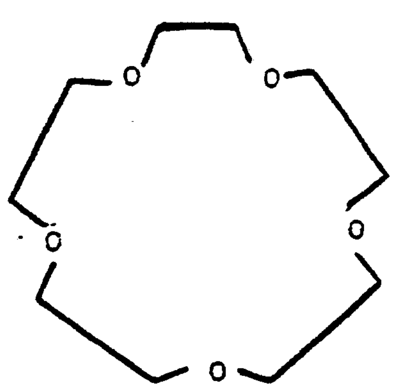

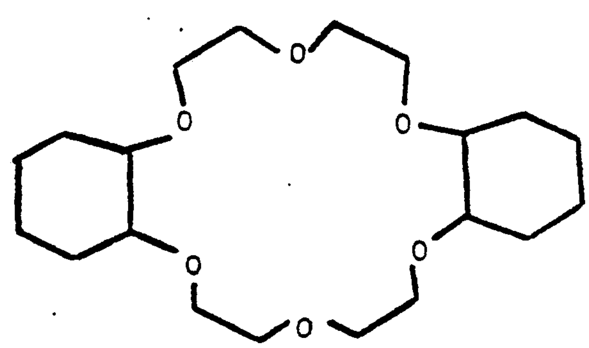

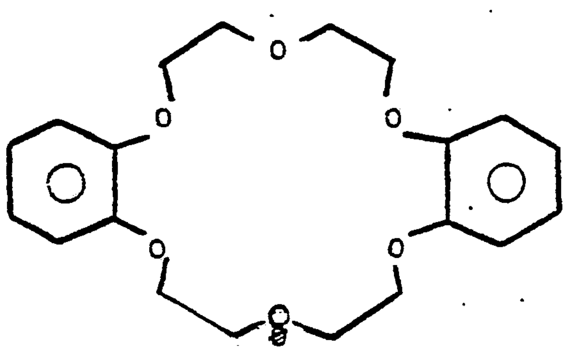

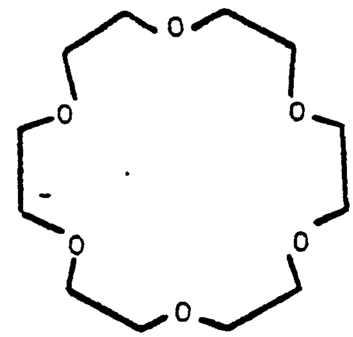

Les composés macrocycliques et bicycliques sont décrits dans le brevet français 7 021 079 publié sous le numéro 2 052 947. On peut citer comme exemples de tels composés concernant la mise en oeuvre du procédé selon l'invention:

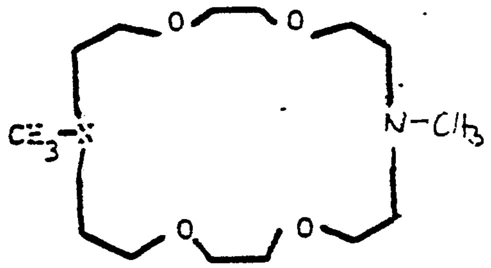

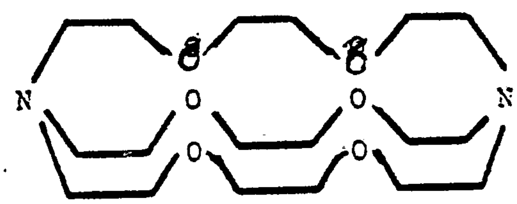

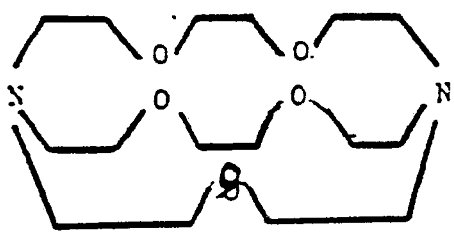

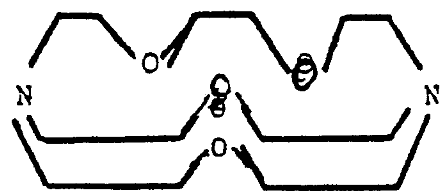

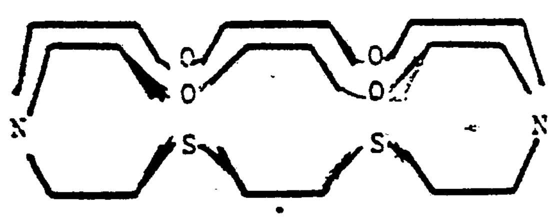

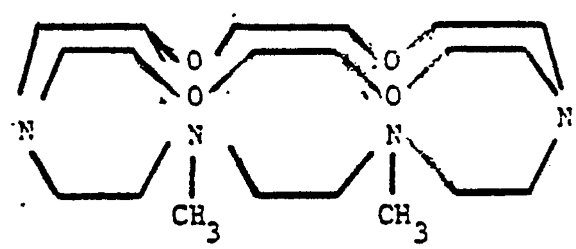

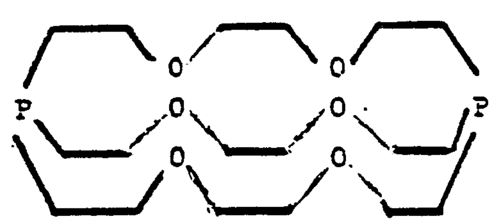

Selon un autre mode de réalisation préférentiel de l'invention, on utilise un agent séquestrant supporté constitué par un support polymère organique réticulé et par une pluralité de groupes fonctionnels fixés sur ledit support, de formule générale (III) dans laquelle $R_1'$, $R_2'$, $R_3'$, $R_4'$, $R_6'$, et $R_7$ identiques ou différents, représentent un atome d'hydrogène ou le radical méthyle et $R_5'$ et $R_8'$ identiques ou différents représentant un atome d'hydrogène ou un radical alkyle ayant de 1 à 4 atomes de carbone. Selon un autre mode de réalisation préférentiel de l'invention, n', m' et p' identiques
ou différents sont supérieurs ou égaux à 1 et inférieurs ou égaux à 6.

On peut citer comme exemples de groupes fonctionnels, les groupes de formules suivantes:

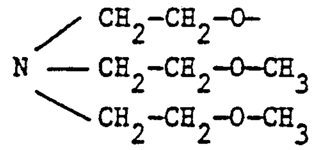

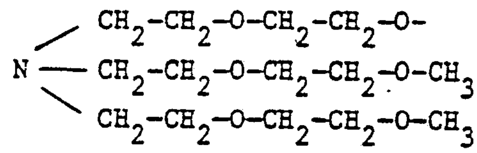

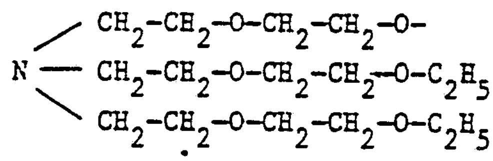

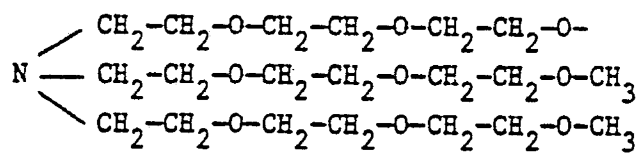

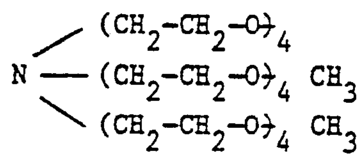

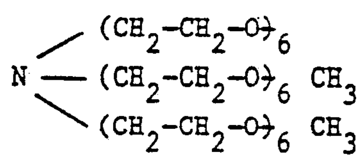

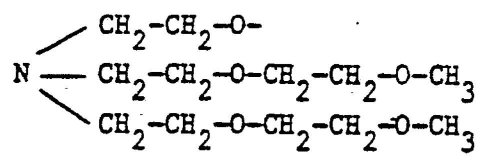

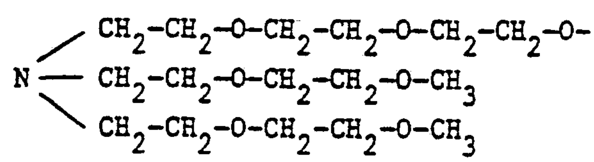

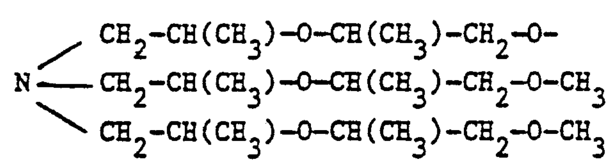

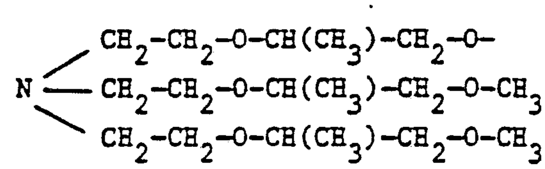

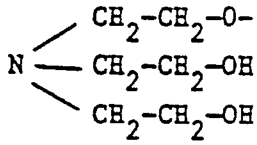

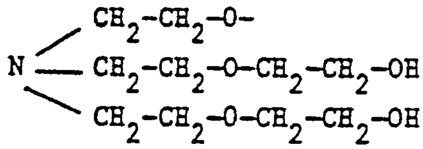

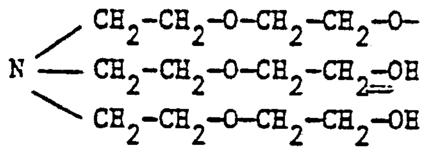

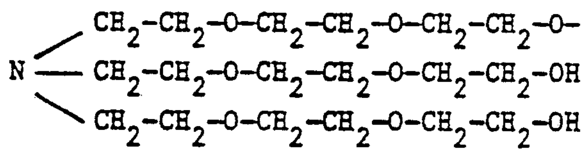

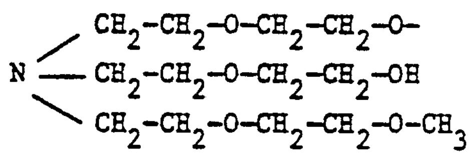

Le support peut dériver de tout polymère organique réticulé comportant des groupements substituables par les groupements fonctionnels de formule (III).

On peut citer comme exemples de polymères organiques adaptés à la présente invention, les polymères dérivés de composés vinylaromatiques tels que le styrène, le methylstyrène et les copolymères de composés vinylaromatiques et de diènes conjugués en $C_4$ - $C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (III) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10 %. Encore plus préférentiellement, le taux de réticulation est inférieur à 5 % environ.

Le groupement substituable est de préférence le chlore ou le brome du radical chloro ou bromo methyl $-CH_2Cl$ ou $-CH_2Br$ fixé sur le noyau benzénique du polystyrène.

On préfère tout particulièrement que le pourcentage de noyaux benzéniques du polystyrène portant un groupement fonctionnel soit supérieur à 5 %. Encore plus préférentiellement, ce pourcentage est supérieur à 10 %.

On peut représenter les agents séquestrants supportés préférés par la formule suivante:

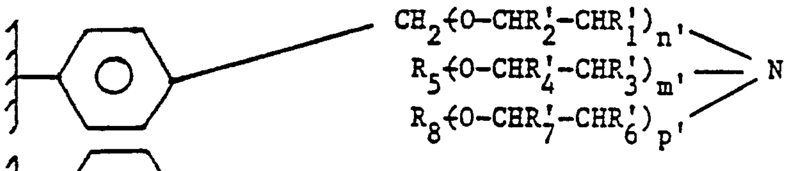

où

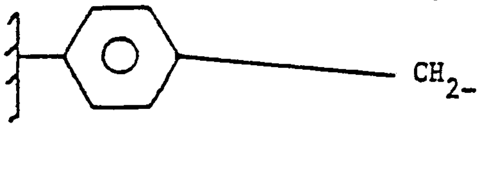

dérive du polystyrène chloro ou bromo méthylé réticulé par le divinylbenzène de formule:

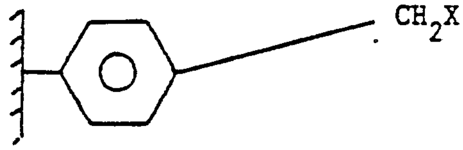

où X représente Cl ou Br.

Selon un autre mode de réalisation préférentiel de l'invention, on utilise un polyéther macrocyclique ou un composé macrocyclique ou bicyclique greffé sur un polymère organique réticulé qui est constitué d'un polystyrène obtenu par réaction du dérivé aminé approprié, du polyéther macrocyclique ou du composé macrocyclique ou bicyclique avec un polystyrène chlorométhylé. On peut représenter cas produits supportés préférés par les formules suivantes:

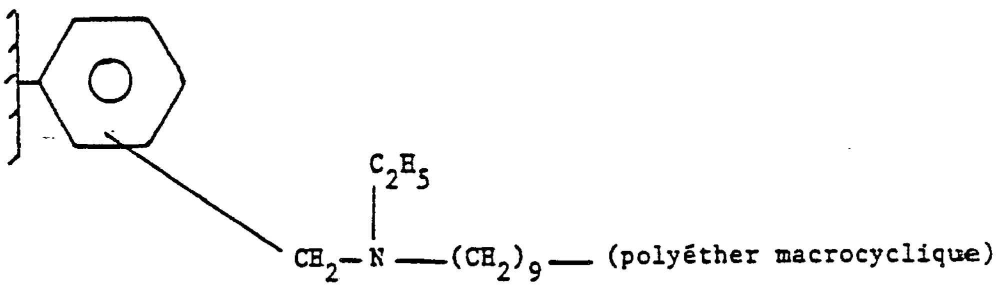

et

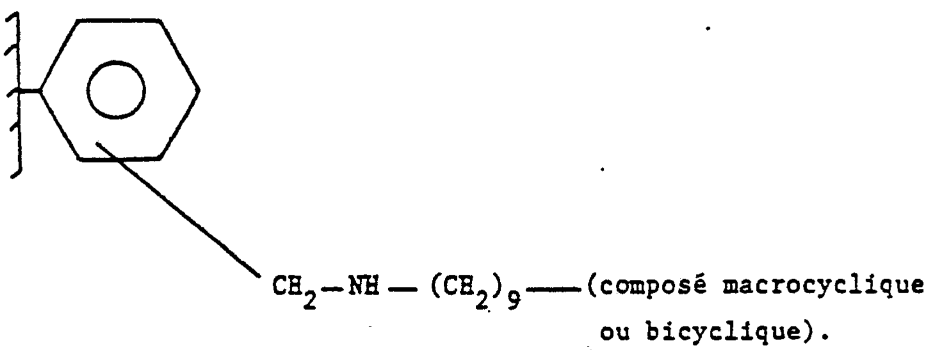

La première et la deuxième étape du procédé de l'invention peuvent être mises en oeuvre en présence ou en l'absence de solvant. Quand on utilise un tiers solvant, ce dernier doit répondre à un certain nombre de conditions: il faut qu'il solubilise les silanes de départ; il faut aussi qu'il soit inerte chimiquement vis-à-vis des silanes introduits ou formés.

On choisit, de préference, un solvant comme, par exemple, le chlorobenzène, l'orthodichlorobenzène, le benzène, la toluène, le cyclohexane, l'heptane, le dichloroéthane, le chlorure de méthylène, le dichlorobenzène, le tétrahydrofurane, le dioxane, le diméthoxyethane.

Selon la première étape du procédé de l'invantion, on opère la redistribution entre le méthyldichlorosilane et le trichlorosilane et/ou le tétrachlorosilane pour former le méthyltrichlorosilane et le dichlorosilane en présence d'un des catalyseurs qui ont été décrits ci-dessus.

La température mise en oeuvre dans cette étape est comprise entre -30°C et la température d'ébullition du milieu réactionnel. On opère de préférence à la température d'ébullition du milieu réactionnel afin de permettre le dégagement du dichlorosilane du milieu réactionnel au fur et à mesure de sa formation; la température d'ébullition du mélange réactionnel étant généralement comprise entre 15°C et 120°C, elle dépend notamment de la nature du solvant utilisé et de sa proportion dans le milieu.

La pression mise en oeuvre peut être inférieure, égale ou supérieure à la pression atmosphérique. On opère de préférence à la pression atmosphérique.

Dans cette première étape, on utilise le catalyseur en quantité telle que le rapport molaire entre le catalyseur (ou les groupements actifs de celui-ci dans le cas des résines ou des systèmes catalytiques supportés) et les silanes de départ (méthyldichlorosilane et trichlorosilane et/ou tétrachlorosilane) est compris de préférence entre 10 et 0,0001. Encore plus préférentiellement, ce rapport est compris entre 0,5 et 0,005.

Le rapport molaire entre, d'une part, le trichlorosilane et/ou le tétrachlorosilane et, d'autre part, le méthyldichlorosilane est de préférence compris entre 0,05 at 5. Ce rapport est plus préférentiellement compris entre 0,1 et 2.

Le rapport molaire entre le solvant et l'ensemble des silanes de départ est compris entre 0 et 100 et de préférence entre 0 et 10.

Dans le cas où l'on utilise comme catalyseur les systèmes catalytiques comportant un sel minéral ionique et un composé complexant, on utilise le composé complexant en quantité telle que le rapport molaire du composé complexant (ou des groupements actifs de celui-ci lorsqu'il est supporté) au sel minéral ionique est, de préférence, compris entre 0,05 et 20. Encore plus préférentiellement, ce rapport est compris entre 0,5 et 2. De plus, le rapport molaire du sel minéral ionique à l'ensemble des silanes de départ est compris de préférence entre 10 et 0,0001. Encore plus préférentiellement, ce rapport est compris entre 0,5 et 0,001.

Cette première étape peut être mise en oeuvre en discontinu ou en continu.

Il est à noter que, selon le procédé de l'invention, on met en oeuvre le méthyldichlorosilane, toutafois, à titre de variante, il peut être envisagé de faire réagir dans la première étape du diméthylchlorosilane produit à ce jour d'une mise en oeuvre beaucoup plus onéreuse que le méthydichlorosilane.

Selon la deuxième étape du procédé de l'invention, après séparation du milieu réactionnel, le dichlorosilane formé au cours de la première étape est dismuté pour former le silane et le trichlorosilane en présence d'un des catalysaurs qui ont été décrits ci-dessus.

La séparation du dichlorosilane du milieu réactionnel est opérée par vaporisation et élimination de celui-ci, soit au fur et à mesure de sa formation lorsque la première étape est réalisée à l'ébullition, soit après réaction par chauffage du milieu réactionnel; cette séparation est de préférence mise en oeuvre en continu et effectuée au fur et à mesure da la formation du dichlorosilane dans le milieu réactionnel lors de la première étape.

Le dichlorosilane ainsi séparé peut contanir notamment de petites quantités de trichlorosilane et/ou de méthyldichlorosilane sans que cela nuise à la mise en oeuvre des étapes ultérieures.

La dismutation du dichlorosilane est de préférence réalisée dans une colonne dans laquelle les chlorosilanes et le catalyseur et son solvant circulent à contre courant. La température de la colonne en tête est comprise entre - 50° C et 120° C et de préférence entre - 30° C et 40° C; la température du pied de la colonne est comprise entre 0° C et 120° C et de préférence entre 15° C et 60° C, la température de la tête de la colonne étant inférieure ou égale à la température du pied de la colonne. La pression de la colonne peut être inférieure, égale ou supérieure à la pression atmosphérique. On opère de préférence à la même pression que celle mise en oeuvre dans la première étape.

Par ailleurs, comme pour la première étape, la deuxième étape peut être réalisée en présence d'un solvant des réactifs tel qu'un hydrocarbure aliphatique ou aromatique. On peut ainsi utiliser comme solvant, par exemple, du cyclohexane, du toluène, du benzène, du chlorobenzène, de l'orthodichlorobenzène, le tétrachloro 1,1,2,2 éthane, l'heptane, le dichloroéther, le chlorure de méthylène, le tétrahydrofurane, le dioxane, le diméthoxyéthane.

Dans cette deuxième étape, on utilise le catalyseur en quantité telle que le rapport molaire entre le catalyseur (ou les groupements actifs de celui-ci dans le cas des résines ou des systèmes catalytiques supportés) et le dichlorosilane est compris de préférence entre 20 et 0,0002. Encore plus préférentiellement, ce rapport est compris entre 1 et 0,01.

Le rapport molaire entre le solvant et le dichlorosilane est de préférence identique à celui utilisé dans la première étape entre le solvant et l'ensemble des silanes.

Dans le cas où l'on utilise comme catalyseur les systèmes catalytiques comportant un sel minéral ionique et un composé complexant, on utilise le composé complexant en quantité telle que le rapport molaire du composé complexant au sel minéral ionique est, de préférence, compris entre 0,05 et 20. Encore plus préférentiellement, ce rapport est compris entre 0,12 et 2. De plus, le rapport molaire du sel minéral ionique au dichlorosilane est compris de préférence entre 2 et 0,0002. Encore plus préférentiellement ce rapport est compris entre 1 et 0,01.

Le silane formé lors de la deuxième étape est récupéré en tête de colonne et le trichlorosilane sortant en pied de colonne avec le catalyseur et son soivant est éventuellement recyclé dans la première etape.

Le silane provenant de la tête de colonne peut être récupéré tel quel ou séparé des éventuels chlorosilanes résiduels par mise en contact du silane gazeux provenant de la tête de colonne avec un solvant réalisant la solvatation sélective des chlorosilanes ou par liquéfaction des chlorosilanes résiduels par refroidissement à basse température. Parmi les solvants opérant cette séparation sélective du silane formé des autres chlorosilanes résiduels on utilise par exemple au moins un solvant choisi parmi: le benzène, le chlorobenzène et l'orthodichlorobenzène.

La présente invention va maintenant être décrite dans une forme de réalisation préférée en se référant à la figure 1.

On introduit dans le réacteur $R_1$ de redistribution, relié par ailleurs au pied de la colonne A, le mélange méthyldichlorosilane - trichlorosilane/tétrachlorosilane. Le catalyseur non supporté C et le solvant S sont également introduits en tête de la colonne A. Le réacteur est maintenu à la pression atmosphérique et le mélange réactionnel dans $R_1$ est chauffé à l'ébullition, le catalyseur C et le solvant S passent dans le réacteur $R_1$ après avoir traversé la colonne A. Le dichlorosilane formé dans $R_1$ est séparé du milieu réactionnel au fur et à mesure de sa formation et introduit dans la colonne A (ce dichlorosilane peut contenir sans inconvénient des traces de silanes non réagis qui peuvent éventuellement, au moins partiellement, être condensés dans l'échangeur $E_1$ et recyclés dans $R_1$).

Le catalyseur de dismutation C et le solvant S alimentés en tête de la colonne A circulent à contre-courant du dichlorosilane. On maintient dans cette colonne A une température ou un gradient de température tels que les produits de la dismutation du dichlorosilane autres que $SiH_4$ restent dissouts dans la phase liquide, le silane étant récupéré en tête de la colonne A. On recueille en pied de cette colonne le trichlorosilane formé en

mélange avec le catalyseur C et le solvant S, produits qui sont recyclés dans le réacteur de redistribution $R_1$.

Si on le désire, on peut opérer la séparation du catalyseur et du solvant (CS) des chlorosilanes (méthyltrichlorosilane formé, méthyldichlorosilane, trichlorosilane et/ou tétrachlorure de silicium n'ayant pas réagi) provenant de la redistribution dans le réacteur $R_1$. Cette séparation est opérée par distillation dans la colonne B de laquelle on recueille en pied dans l'échangeur $E_2$ le catalyseur et le solvant (C-S) et en tête le mélange des chlorosilanes. Le catalyseur et le solvant peuvent être recylcés en tête de la colonne A après refroidissement dans l'échangeur $E_3$. Les chlorosilanes à leur tour peuvent être séparés par distillation dans la colonne C de façon à recueillir en pied dans l'échangeur $F_4$ le méthyltrichlorosilane qui peut être valorisé par ailleurs et en tête les autres chlorosilanes qui peuvent être recyclés dans le réacteur $R_1$ de redistribution.

La présente invention va maintenant être illustrée par les exemples ci-après qui font également référence à la figure 1.

**Exemple 1**

La redistribution entre $CH_3SiHCl_2$ et $HSiCl_3$ est opérée dans le réacteur $R_1$ de 4 l. La colonne A est une colonne à plateaux de 4 cm de diamètre et de 1,6 m de longueur, dans celle-ci a lieu la dismutation de $H_2SiCl_2$.

Ces réactions sont effectuées en présence du système catalytique tris(dioxa-3,6 heptyl)amine (symbolisé TDA 1) et LiBr, en milieu chlorobenzénique.

On introduit $CH_3SiHCl_2$ et $HSiCl_3$ dans la réacteur $R_1$ à un débit de 2 700 g/h pour $CH_3SiHCl_2$ et de 500 g/h pour $HSiCl_3$. Une partie de ces chlorosilanes provient du recyclage, après séparation du système catalytique plus solvant et de $CH_3SiCl_3$ formé.

Le système catalytique en solution dans $C_6H_5Cl$ (solvant) est introduit en tête de la colonne A.

Sa composition massique est la suivante;

| | |
|---|---|
| $C_6H_5Cl$ | 91,6 % |
| TDA 1 | 6,6 % |
| LiBr | 1,8 % |

Son débit est de 1 850 g/h.

Ce mélange passe dans le réacteur $R_1$ après avoir traversé la colonne A.

Le milieu réactionnel dans le réacteur $R_1$ est à l'ébullition (température comprise entre 70 et 75° C). La phase gazeuse produite contient principalement $H_2SiCl_2$ mais aussi un peu de $CH_3SiHCl_2$ et de $HSiCl_3$. Ces deux derniers chlorosilanes sont partiellement condensés dans le condenseur $E_1$ et recyclés. $H_2SiCl_2$ formé est donc introduit sous forme gazeuse dans la colonne A at circule à contre-courant du mélange système catalytique plus solvant. Sa dismutation conduit à la formation de $SiH_4$ qui se dégage en tête de colonne et de $HSiCl_3$ qui est recyclé dans le réacteur $R_1$, en solution dans le chlorobenzène, avec le système catalytique.

Le débit du silane ainsi produit est de 120 g/h.

La phase condensée provenant du réacteur $R_1$ a la composition suivante (pourcentages massiques):

| | |
|---|---|
| $H_2SiCl_2$ | 5,1 % |
| $HSiCl_3$ | 0,7 % |
| $CH_3SiHCl_2$ | 26,4 % |
| $CH_3SiCl_3$ | 32,8 % |
| TDA 1 | 2,3 % |
| LiBr | 0,6 % |

Ce mélange est envoyé dans la colonne à distiller B de 1,60 m de long et de diamètre 8 cm afin de séparer le système catalytique en solution dans $C_6H_5Cl$ des différents chlorosilanes n'ayant pas réagi ou formés. La température en tête est de 52° C, elle est de 131° C en pied.

Le système catalytique plus le solvant, sortant en pied de colonne sont recyclés en tête de la colonne A après passage dans le condenseur $E_3$ amenant la température du mélange à 0° C.

Le mélange de chlorosilanes sortant en tête de colonne B est envoyé dans la colonne à distiller C afin de séparer $CH_3SiCl_3$ formé des autres chlorosilanes. Cette colonne a 2 m de long et 8,5 cm de diamètre, $CH_3SiCl_3$ sort en pied.

La composition du mélange sortant en tête de colonne est la suivante (pourcentages massiques)

| | |
|---|---|
| $H_2SiCl_2$ | 15,7 % |
| $HSiCl_3$ | 2,2 % |
| $CH_3SiHCl_2$ | 82,1 % |

Ce mélange est recyclé dans le réacteur $R_1$.

**Revendications**

1. Procédé de fabrication de silane à partir de méthyldichlorosilane et de trichlorosilane et/ou de tétrachlorosilane caractérisé en ce que:

A) Dans une première étape, on opère la redistribution entre le méthyldichlorosilane et le trichlorosilane et/ou le tétrachlorosilane en présence d'un catalyseur pour former du méthyltrichlorosilane et du dichlorosilane,

B) dans une deuxième étape, après séparation du milieu réactionnel, le dichlorosilane formé au cours de la première étape est dismuté en présence d'un catalyseur pour former le silane et le trichlorosilane; le silane formé est récupéré et le trichlorosilane est éventuellement recyclé dans la première étape.

2. Procédé selon la revendication 1 caractérisé en ce que le catalyseur mis en oeuvre dans la première et la deuxième étape identique ou différent est choisi parmi:

- les sels d'ammonium quaternaire répondant à la formule $R_4'NY$ et les sels de phosphonium quaternaire répondant à la formule $R_4'PY$, formules dans lesquelles R' identiques ou différents représentent un radical hydrocarboné monovalent at Y un halogène,

- les amines tertiaires de formule générale NR'R''R''' dans laquelle R'R''R''' sont des radicaux hydrocarbonés monovalents identiques ou différents,

- les résines échangeuses d'ions comportant des groupements amine tertiaire ou ammonium quaternaire,

- les systèmes catalytiques comportant un sel minéral ionique $M^+A^-$ et un compose complexant le cation $M^+$ dudit sel.

3. Procédé selon la revendication 2 caractérisé en ce que les sels d'ammonium quaternaires $R_4'$ NY et les sels de phosphonium quaternaire $R_4'PY$ sont tels que R' identiques ou différents et choisi parmi les radicaux : méthyle, éthyle, isopropyle, butyle, hexyle-secondaire, 2-éthylhexyle, octadécyle, cyclohexyle, cyclopentyle, vinyle, allyle, hexényle, cyclopentényle, butaniényle, phényle, tolyle, benzyle, biphényle, naphtyle, 3-chloropropyle, 3-3-3-trifluoropropyle, 4-bromohexyle, bromocyclopentyle, difluorocyclohexyle, chloroallyle, chlorocyclohexényle, chlorophényle, dibromophényle, α,α,α-trifluorotolyle, bromonaphtyle.

4. Procédé selon la revendication 2 caractérisé en ce que les amines tertiaires sont choisies parmi: la tri-n-propylamine, la triisopropylamine, la diisopropyl-n-éthylamine, la tri-n-butylamine, la triisobutylamine, la tri-sec-butylamine, la tri-n-pentylamine, la di-n-butyléthylamine, la di-isobutyléthylamine, la di-2-éthylbutylméthylamine, la di-n-octylméthylamine, la di-2-éthylhexylméthylamine, la dilaurylméthylamine, la triundécylamine, la trioctadécylamine, la n-octadécyl-n-propyléthylamine, la di-n-butylphénylamine, la triphénylamine, la tris(biphényl)amine, la 2-naphtyldi-n-butylamine, la tritolylamine, la trixylylamine, la tris(phénylméthylphényl)amine, la tris(2-phényléthyl)amine, la tris(8-phényloctyl)amine, la tricyclohexylamine, la tricyclooctylamine, la tris(4-méthyl-cyclohexyl)amine, la tris(2-cyclohexyléthyl)amine, la tris(3-n-buténypl)amine, la triisobuténylamine, la diallyl-n-butylamine, la n-n-propylpipéridine, la n-iso-butylpyrrolidine, la n-iso-butylmorpholine, etc..

5. Procédé selon la revendication 2 caractérisé en ce que la résine échangeuse d'ions est insoluble dans les produits mis en oeuvre dans la réaction comporte des groupes alkyl amine tertiaire ou alkyle ammonium quaternaire dans lesquels les radicaux alkyle ont de 1 à 8 atomes de carbone.

6. Procédé selon la revendication 2 caractérisé en ce que le sel mineral ionique $M^+A^-$ est choisi parmi ceux dans lesquels $M^+$ représente un alcalin, un alcalino-terreux ou l'ammonium et de préférence: $Li^+$, $Na^+$, $K^+$, $Ca^{++}$, $NH_4^+$ et ceux dans lesquels $A^-$ représente un halogène, $SCN^-$, $CN^-$, $CO_3^{--}$ et de préférence : $Cl^-$, $Br^-$, $I^-$

7. Procédé selon la revendication 2 caractérisé en ce que le composé complexant le cation du sel minéral ionique est un agent séquestrant de formule:

$$[N\text{-}(CHR_1\text{-}CHR_2\text{-}O\text{-}(CHR_3\text{-}CHR_4\text{-}O)_n\text{-}R_5)_3] \qquad (I)$$

dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_m H_{2m} - Ø$ ou $C_m H_{2m+1} -Ø-$, où m est compris entre 1 et 12 ($1<m<12$).

8. Procédé selon la revendication 2 caractérisé en ce que le composé complexant est un polyéther macrocyclique ayant de 15 à 30 atomes dans le cycle et constitué de 4 à 10 unités -O-X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayant de 1 à 4 atomes de carbone, un des X pouvant être $-CHR_6-CHR_8-CR_9R_7-$ quand les unités -O-X comprennent le groupement $-O-CHR_6-CHR_7-$.

9. Procédé selon la revendication 2 caractérisé en ce que le composé complexant est un composé macrocyclique ou bicyclique de formule générale IIa ou IIb

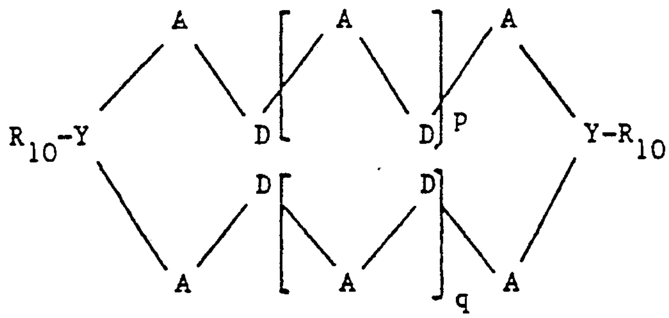

(IIa)

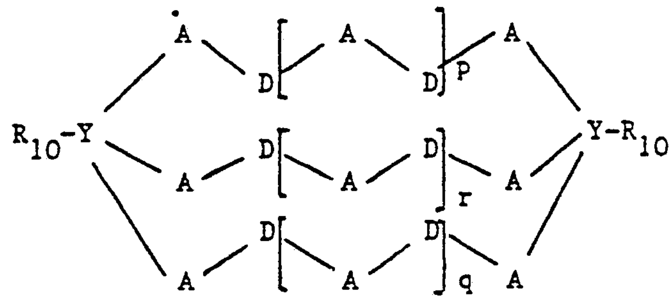

(IIb)

dans lesquelles:

- Y représente N ou p
- A représente un groupement alkylène ayant de 1 à 3 atomes de carbone
- D représente O, S ou N-$R_{11}$ où $R_{11}$ représente un radical alkyle ayant de 1 à 6 atomes de carbone
- $R_{10}$ représente un radical alkyle ayant de 1 à 6 atomes de carbone, p, q et r identiques ou différents sont des nombres entiers compris entre 1 et 5.

10. Procédé selon la revendication 2 caractérisé en ce que le composé complexant est choisi parmi les agents séquestrants, les polyéthers macrocycliques et les composés macrocycliques ou bicycliques greffés sur des supports polymères organiques réticulés.

11. Procédé selon la revendication 10 caractérisé en ce que les agents séquestrants greffés sont constitués par un support polymère organique réticulé et par une pluralité de groupes fonctionnels, fixés sur ledit support, de formule générale:

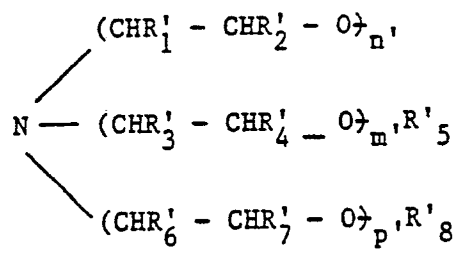

(III)

dans laquelle $R_1'$, $R_2'$, $R_3'$, $R_4'$, $R_6'$ et $R_7'$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$ avec q' supérieur ou égal à 1 et inférieur ou égal à environ 12, et dans laquelle n', m', et p' identiques ou différents sont supérieurs ou égaux à 1 et inférieurs ou égaux à 10.

12. Procédé selon la revendication 7 caractérisé en ce que l'agent séquestrant de formule (I) est choisi parmi:

- la tris(oxa-3 butyl)amine de formule:
  $N-(-CH_2-CH_2-O-CH_3)_3$
- la tris(dioxa-3,6 heptyl)amine de formule:
  $N-(-CH_2-CH_2-O-CH_2-CH_2-O-CH_3)_3$
- la tris(trioxa-3,6,9 décyl)amine de formule:
  $N-(-CH_2-CH_2-O-CH_2-CH_2-O-CH_2-CH_2-O-CH_3)_3$
- la tris(dioxa-3,6 octyl)amine de formule:
  $N-(-CH_2-CH_2-O-CH_2-CH_2-O-C_2H_5)_3$
- la tris(trioxa-3,6,9 undécyl)amine de formule:
  $N-(-CH_2-CH_2-O-CH_2-CH_2-O-CH_2-CH_2-O-C_2H_5)_3$
- la tris(dioxa-3,6 nonyl)amine de formule:
  $N-(-CH_2-CH_2-O-CH_2-CH_2-O-C_3H_7)_3$
- la tris(trioxa-3,6,9 dodécyl)amine de formule:
  $N-(-CH_2-CH_2-O-CH_2-CH_2-O-CH_2-CH_2-O-C_3H_7)_3$

- la tris(dioxa-3,6 décyl)amine de formule:
$N-(-CH_2-CH_2-O-CH_2-CH_2-O-C_4H_9)_3$
- la tris(trioxa-3,6,9 tridécyl)amine de formule:
$N-(-CH_2-CH_2-O-CH_2-CH_2-O-CH_2-CH_2-O-C_4H_9)_3$
- la tris (tetra-oxa-3,6,9,12 tridecyl)amine de formule:
$N-[CH_2-CH_2-O-(-CH_2-CH_2-O)_3-CH_3]_3$
- la tris(hexa-oxa-3,6,9,12,15,18 nonadecyl)amine de formule:
$N-[CH_2-CH_2-O-(CH_2-CH_2-O-)_5\ CH_3]_3$
- la tris(dioxa-3,6 méthyl-4 heptyl)amine de formule:
$N-[CH_2-CH_2-OCH-(CH_3)-CH_2-O-CH_3]_3$
- la tris(dioxa-3,6 diméthyl-2,4 heptyl)amine de formule:
$N-[CH_2CH-(CH_3)-OCH(CH_3)-CH_2-O-CH_3]_3$.

13. Procédé selon la revendication 8 caractérisé en ce que le polyéther macrocyclique est choisi parmi les composés de formule générale:

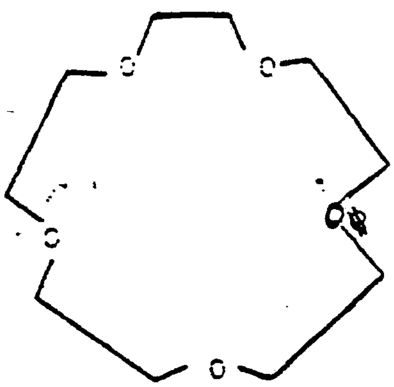

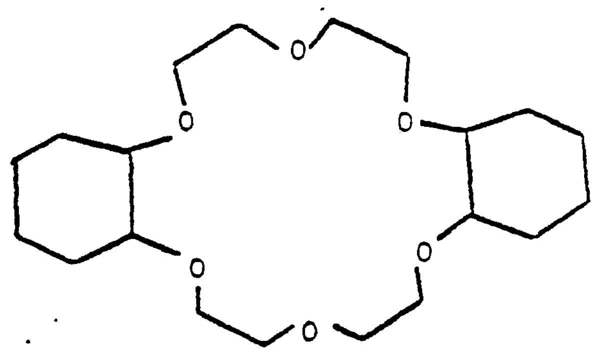

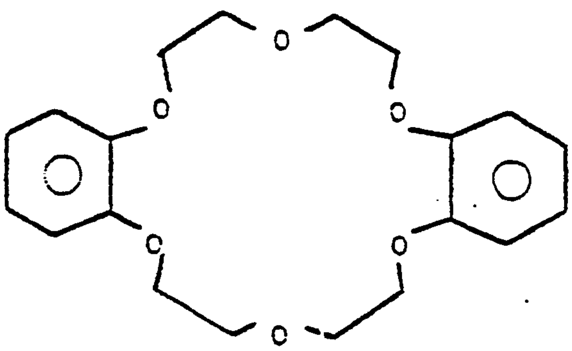

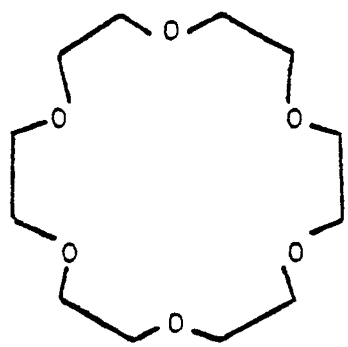

14. Procédé selon la revendication 9 caractérisé en ce que le composé macrocyclique ou bicyclique est choisi parmi les composés de formule générale:

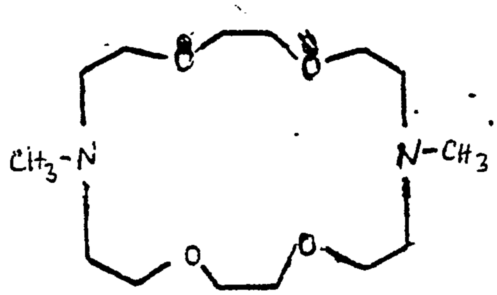

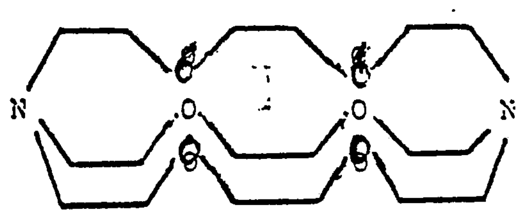

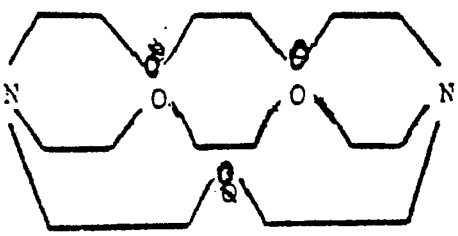

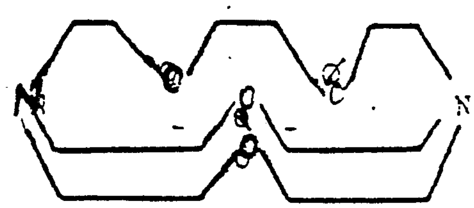

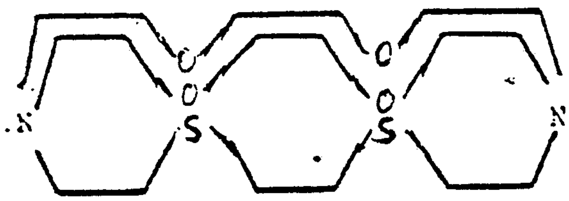

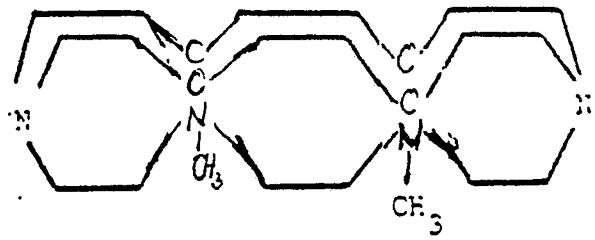

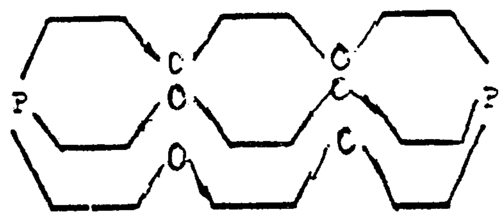

15. Procédé selon la revendication 10 caractérisé en ce que les agents séquestrants greffés sont tels que les groupes fonctionnels de formule générale (III) sont choisis parmi les groupes de formules suivantes:

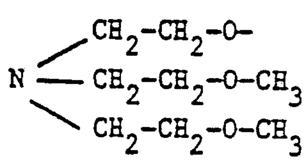

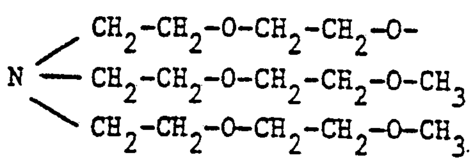

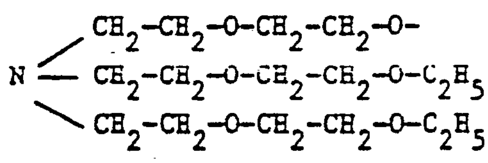

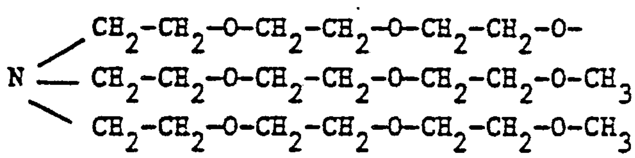

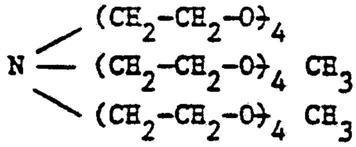

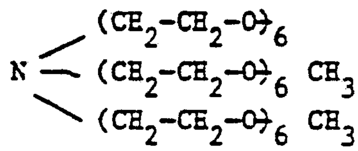

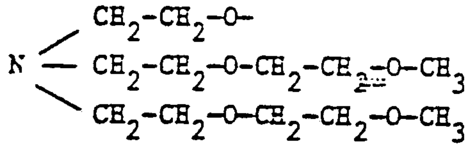

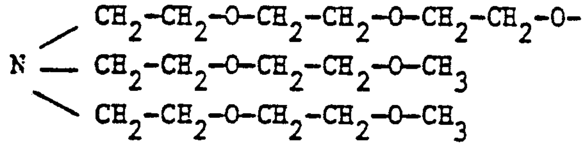

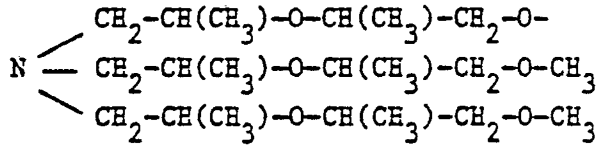

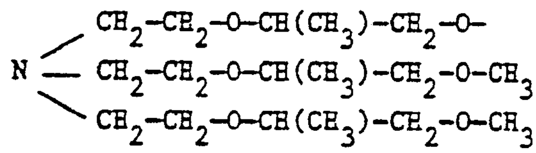

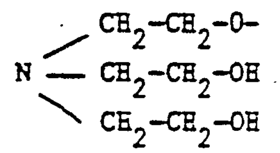

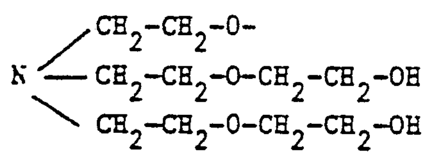

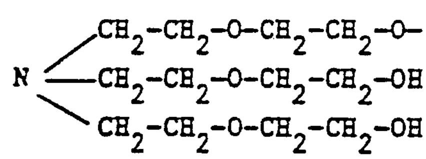

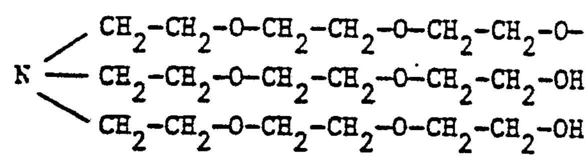

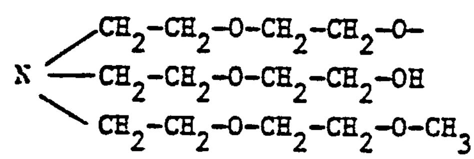

16. Procédé selon la revendication 10 ou 15 caractérisé en ce que les polymères organiques sont choisis parmi les polymères dérivés de composés vinylaromatiques tels que le styrène, le methylstyrène et les copolymères de composés vinylaromatiques et de diènes conjugués en $C_4$ - $C_6$ tels que les copolymères du styrène et du butadiène et du styrène et de l'isoprène.

17. Procédé selon la revendication 1 caractérisé en ce que la température de mise en oeuvre de la première étape est comprise entre -30° C et la température d'ébullition du milieu réactionnel et de préférence entre 15° C et 120° C.

18. Procédé selon la revendication 1 caractérisé en ce que l'on utilise le catalyseur en quantité telle que le rapport molaire entre le catalyseur (ou les groupements actifs de celui-ci dans le cas des résines ou des systèmes catalytiques supportés) et les silanes de départ (méthyldichlorosilane et trichlorosilane et/ou tétrachlorosilane) est compris de préférence entre 10 et 0,0001.

19. Procédé selon la revendication 1 caractérisé en ce que le rapport molaire entre, d'une part, le trichlorosilane et/ou le tétrachlorosilane et, d'autre part, le méthyldichlorosilane est de préférence compris entre 0,05 et 5.

20. Procédé selon la revendication 1 caractérisé en ce que la première et/ou la deuxième étape sont mises en oeuvre en présence d'un solvant; le rapport molaire entre le solvant et l'ensemble des silanes de départ est compris entre 0 et 100 et de préférence entre 0 et 10.

21. Procédé selon la revendication 1 caractérisé en ce que l'on fait réagir du diméthylchlorosilane.

22. Procédé selon la revendication 1 caractérisé en ce que la séparation du dichlorosilane du milieu réactionnel est opérée par vaporisation et élimination de celui-ci, soit au fur et à mesure de sa formation, soit après la redistribution par chauffage du milieu réactionnel.

23. Procédé selon la revendication 1 caractérisé en ce que la deuxième étape est réalisée dans une colonne dans laquelle les chlorosilanes et le catalyseur et son solvant fonctionnent à contre-courant; la température de la colonne en tête est comprise entre - 50° C et 120° C et de préférence entre - 30° C et 40° C, la température en pied de la colonne est comprise entre 0° C et 120° C et de préférence entre 15° C et 60° C, la température en tête étant inférieure ou égale à la température en pied.

24. Procédé selon la revendication 20 caractérisé en ce que le solvant est choisi parmi le cyclohexane, le toluène, le benzène, le chlorobenzène, l'orthodichlorobenzène, le tétrachloro 1,1,2,2 éthane, l'heptane, le dichloroéther, le chlorure de méthylène, le tétrahydrofurane, le dioxane, le diméthoxyéthane.

25. Procédé selon la revendication 1 caractérisé en ce que l'on utilise le catalyseur en quantité telle que le rapport molaire entre le catalyseur (ou les groupements actifs de celui-ci dans le cas des résines ou des systèmes catalytiques supportés) et le dichlorosilane est compris de préférence entre 20 et 0,0002.

26. Procédé selon la revendication 1 caractérisé en ce que le silane est récupéré après séparation des éventuels chlorosilanes résiduels par mise en contact du silane gazeux provenant de la tête de colonne avec un solvant réalisant la solvatation sélective des chlorosilanes ou par liquéfaction des chlorosilanes résiduels par refroidissement à basse température.

**Patentansprüche**

1. Verfahren zur Herstellung von Silan aus Methyldichlorsilan und Trichlorsilan und/oder Tetrachlorsilan, dadurch gekennzeichnet, daß:

A) in einer ersten Stufe eine Neuverteilung zwischen Methyldichlorsilan und Trichlorsilan und/oder Tetrachlorsilan in Anwesenheit eines Katalysators durchgeführt wird, um Methyltrichlorsilan und Dichlorsilan herzustellen,

B) in einer zweiten Stufe nach Trennung des Reaktionsgemisches das im Verlauf der 1. Stufe entstandene Dichlorsilan in Anwesenheit eines Katalysators dismutiert wird, um Silan und Trichlorsilan zu bilden; das entstandene Silan wird gewonnen und das Trichlorsilan eventuell in die erste Stufe zurückgeführt.

2. Verfahren nach Patentanspruch 1, dadurch gekennzeichnet, daß die in der ersten und in der zweiten Stufe verwendeten identischen oder verschiedenen Katalysatoren aus folgenden Gruppen ausgewählt wurden:

- quartäre Ammoniumsalze der Formel $R_4'NY$ und quartäre Phosphoniumsalze der Formel $R_4'PY$, in welchen Formeln R' identische oder verschiedene, einwertige Kohlenwasserstoffradikale und Y ein Halogen bedeuten,
- tertiäre Amine der allgemeinen Formel NR'R''R''', in der R', R'', R''' identische oder verschiedene, einwertige Kohlenwasserstoffradikale sind,
- tertiäre Aminogruppen oder quartäre Ammoniumgruppen tragende Ionenaustauscher,
- katalytische Systeme mit einem ionischen Mineralsalz $M^+A^-$ und einer mit dem Kation $M^+$ des genannten Salzes einen Komplex bildende Verbindung.

3. Verfahren nach Patentanspruch 2, dadurch gekennzeichnet, daß die quartären Ammoniumsalze $R_4'NY$ und die quartären Phosphoniumsalze $R_4'PY$ identische oder verschiedene, aus folgenden Radikalen ausgewählte R' enthalten: Methyl, Äthyl, Isopropyl, Butyl, sekundäres Hexyl, 2-Äthylhexyl, Octadecyl, Cyclohexyl, Cyclopentyl, Vinyl, Allyl, Hexenyl, Cyclopentenyl, Butadienyl, Phenyl, Tolyl, Benzyl, Biphenyl, Naphtyl, 3-Chlorpropyl, 3,3,3-Trifluorpropyl, 4-Bromhexyl, Bromcyclopentyl, Difluorcyclohexyl, Chlorallyl, Chlorcyclohexenyl, Chlorphenyl, Dibromphenyl, α,α,α-Trifluortolyl, Bromnaphthyl.

4. Verfahren nach Patentanspruch 2, dadurch gekennzeichnet, daß die tertiären Amine aus folgenden gewählt werden:

Tri-n-propylamin, Triisopropylamin, Diisopropyl-n-äthylamin, Tri-n-butylamin, Triisobutylamin, Tri-sek.-butylamin, Tri-n-pentylamin, Di-n-butyläthylamin, Diisobutyläthylamin, Di-2-äthylbutylmethylamin, Di-n-oktylmethylamin, Di-2-äthylhexymethylamin, Dilaurylmethylamin, Triundecylamin, Trioktadecylamin, n-Oktadecyl-n-propyläthylamin, Di-n-butylphenylamin, Triphenylamin, Tris(biphenyl)-amin, 2-Naphthyl-di-n-butylamin, Tri-tolylamin, Trixylylamin, Tris(phenylmethylphenyl)-amin, Tris(2-phenyläthyl)-amin, Tris(8-phenyloktyl)-amin, Tricyclohexylamin, Tricyclooktylamin, Tris(4-methylcyclohexyl)-amin, Tris(2-cyclohexyläthyl)-amin, Tris(3-n-butenyl)-amin, Triisobutenylamin, Diallyl-n-butylamin, n-n-propylpiperidin, n-isobutylpyrrolidin, n-Isobutylmorpholin, etc.

5. Verfahren nach Patentanspruch 2, dadurch gekennzeichnet, daß der Ionenaustauscher in den an der Reaktion teilnehmenden Substanzen unlöslich ist und eine tertiäre Alkylamino- oder eine quartäre

Alkylammoniumgruppe enthält, in denen die Alkylradikalel bis 8 Kohlenstoffatome enthalten.

6. Verfahren nach Patentanspruch 2, dadurch gekennzeichnet, daß das ionische Mineralsalz $M^+A^-$ unter denen gewählt wurde, in denen $M^+$ ein Alkali- oder Erdalkalimetall oder Ammonium und vorzugsweise $Li^+$, $Na^+$, $K^+$, $Ca^{++}$, $NH_4^+$ bedeutet und in denen $A^-$ ein Halogen, $SCN^-$, $CN^-$, $CO_3^{--}$ und vorzugsweise $Cl^-$, $Br^-$ oder $I^-$ bedeutet.

7. Verfahren nach Patentanspruch 2, dadurch gekennzeichnet, daß die mit dem Kation des ionischen Mineralsalzes einen Komplex bildende Verbindung ein Komplexbildner der Formel

$$[(N - (CHR_1 - CHR_2 - O - (CHR_3 - CHR_4 -O)_n - R_5)_3] \qquad (I)$$

ist, in der n eine ganze Zahl größer oder gleich 0 und kleiner oder gleich 10 ist ($0 \leqslant n \leqslant 10$), $R_1$, $R_2$, $R_3$ und $R_4$ gleich oder verschieden sind und ein Wasserstoffatom oder ein Alkylradikal mit 1 bis 4 Kohlenstoffatomen bedeuten und $R_5$ ein Alkyl- oder Cycloalkylradikal mit 1 bis 12 Kohlenstoffatomen, ein Phenylradikal oder ein Radikal der Form - $C_mH_{2m}$ - Ø oder $C_mH_{2m+1}$ - Ø -, wobei m eine Zahl zwischen 1 und 12 ist ($1 < m < 12$).

8. Verfahren nach Patentanspruch 2, dadurch gekennzeichnet, daß der Komplexbildner ein makrocyclischer Polyäther mit 15 bis 30 ringbildenden Atomen ist und aus 4 bis 10 Gruppen der Form - O -X besteht, in denen X entweder - $CHR_6$ - $CHR_7$ - oder - $CHR_6$ - $CHR_8$ - $CR_8R_7$ - ist, wobei $R_6$, $R_7$, $R_8$ und $R_9$ identisch oder verschieden sind und ein Wasserstoffatom oder ein Alkylradikal mit 1 bis 4 Kohlenstoffatomen bedeuten, wobei eines der X - $CHR_6$ - $CHR_8$ - $CR_9R_7$ - sein kann, wenn die - O - X - Gruppen die Gruppe O - $CHR_6$ - $CHR_7$ - enthalten.

9. Verfahren nach Patentanspruch 2, dadurch gekennzeichnet, daß der Komplexbildner eine makrocyclische oder bicyclische Verbindung der allgemeinen Formel IIa oder IIb ist,

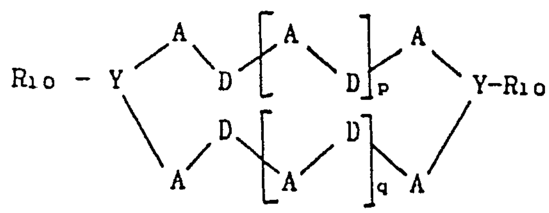

(IIa)

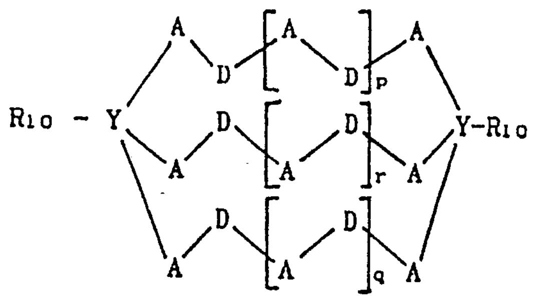

(IIb)

in denen

- Y entweder N oder P bedeutet,
- A eine Alkylengruppe mit 1 bis 3 Kohlenstoffatomen,
- D entweder O, S oder N-$R_{11}$, wobei $R_{11}$ ein Alkylradikal mit 1 bis 6 Kohlenstoffatomen bedeutet,
- $R_{10}$ ein Alkylradikal mit 1 bis 6 Kohlenstoffatomen und p, q und r gleich oder verschieden und ganze Zahlen zwischen 1 und 5 sind.

10. Verfahren nach Patentanspruch 2, dadurch gekennzeichnet, daß die komplexbildende Verbindung aus den auf vernetzte, organische, polymerisierte Trägersubstanzen gepfropften Komplexbildnern, makrocyclischen Polyäthern und makrocyclischen oder bicyclischen Verbindungen gewählt ist.

11. Verfahren nach Patentanspruch 10, dadurch gekennzeichnet, daß die gepfropften Komplexbildner aus einer vernetzten, organischen, polymerisierten Trägersubstanz und einer Vielzahl mit dieser Trägersubstanz verbundener funktioneller Gruppen der allgemeinen Formel

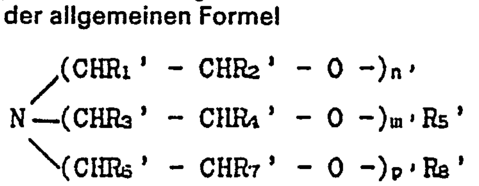

(III)

bestehen, in der $R_1'$, $R_2'$, $R_3'$, $R_4'$, $R_6'$ und $R_7'$ identisch oder verschieden sind und ein Wasserstoffatom, ein Alkyl- oder Cycloalkylradikal mit 1 bis 12 Kohlenstoffatomen, ein Phenylradikal, oder ein Radikal der Form - $C_{q'}H_{2q'}$ - Ø - oder $C_{q'}H_{2q'+1}$ - Ø - mit q' größer oder gleich 1 und kleiner oder gleich ca. 12 bedeuten, und in der n', m' und p' gleich oder verschieden und größer oder gleich 1 und kleiner oder gleich 10 sind.

12. Verfahren nach Patentanspruch 7, dadurch gekennzeichnet, daß der Komplexbildner der Formel (I) eine der folgenden Substanzen ist:
- Tris(3-oxa-butyl)-amin mit der Formel:
$N(CH_2\text{-}CH_2\text{-}O\text{-}CH_3)_3$
- Tris(3,6-dioxa-heptyl)-amin mit der Formel:
$N(CH_2\text{-}CH_2\text{-}O\text{-}CH_2\text{-}CH_2\text{-}O\text{-}CH_3)_3$
- Tris(3,6,9-trioxa-decyl)-amin mit der Formel:
$N(CH_2\text{-}CH_2\text{-}O\text{-}CH_2\text{-}CH_2\text{-}O\text{-}CH_2\text{-}CH_2\text{-}O\text{-}CH_3)_3$
- Tris(3,6-dioxa-octyl)-amin mit der Formel:
$N(CH_2\text{-}CH_2\text{-}O\text{-}CH_2\text{-}CH_2\text{-}O\text{-}C_2H_5)_3$
- Tris(3,6,9-trioxa-undecyl)-amin mit der Formel:
$N(CH_2\text{-}CH_2\text{-}O\text{-}CH_2\text{-}CH_2\text{-}O\text{-}CH_2\text{-}CH_2\text{-}O\text{-}C_2H_5)_3$
- Tris(3,6-dioxa-nonyl)-amin mit der Formel:
$N(CH_2\text{-}CH_2\text{-}O\text{-}CH_2\text{-}CH_2\text{-}O\text{-}C_3H_7)_3$
- Tris(3,6,9-trioxa-dodecyl)-amin mit der Formel:
$N(CH_2\text{-}CH_2\text{-}O\text{-}CH_2\text{-}CH_2\text{-}O\text{-}CH_2\text{-}CH_2\text{-}O\text{-}C_3H_7)_3$
- Tris(3,6-dioxa-decyl)-amin mit der Formel:
$N(CH_2\text{-}CH_2\text{-}O\text{-}CH_2\text{-}CH_2\text{-}O\text{-}C_4H_9)_3$
- Tris(3,6,9-trioxa-tridecyl)-amin mit der Formel:
$N(CH_2\text{-}CH_2\text{-}O\text{-}CH_2\text{-}CH_2\text{-}O\text{-}CH_2\text{-}CH_2\text{-}O\text{-}C_4H_9)_3$
- Tris(3,6,9,12-tetraoxa-tridecyl)-amin mit der Formel;
$N(CH_2\text{-}CH_2\text{-}O\text{-}(CH_2\text{-}CH_2\text{-}O)_3\text{-}CH_3)_3$
- Tris(3,6,9,12,15,18-hexaoxa-nonadecyl)-amin mit der Formel:
$N(CH_2\text{-}CH_2\text{-}O\text{-}(CH_2\text{-}CH_2\text{-}O)_5\text{-}CH_3)_3$
- Tris(3,6-dioxa-4-methyl-heptyl)-amin mit der Formel:
$N(CH_2\text{-}CH_2\text{-}O\text{-}CH(CH_3)\text{-}CH_2\text{-}O\text{-}CH_3)_3$
- Tris(3,6-dioxa-2,4-dimethyl-heptyl)-amin mit der Formel:
$N(CH_2\text{-}CH(CH_3)\text{-}O\text{-}CH(CH_3)\text{-}CH_2\text{-}O\text{-}CH_3)_3$.

13. Verfahren nach Patentanspruch 8, dadurch gekennzeichnet, daß der makrocyclische Polyäther einer der folgenden allgemeinen Formeln genügt:

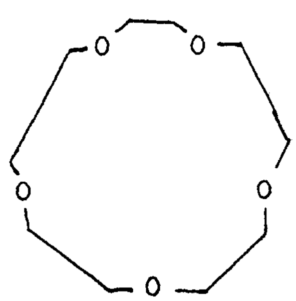
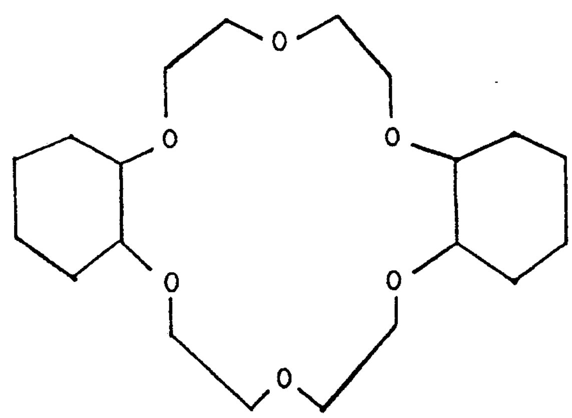
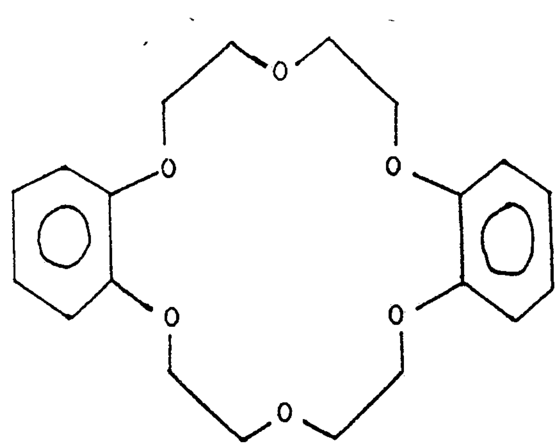
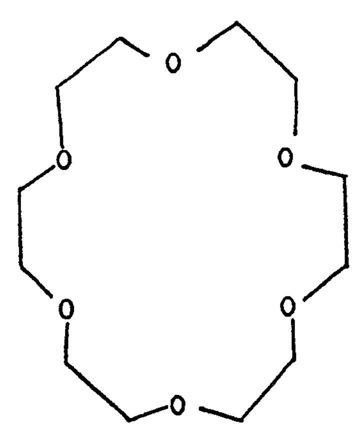

14. Verfahren nach Patentanspruch 9, dadurch gekennzeichnet, daß die makrocyclische oder bicyclische Verbindung einer folgenden allgemeinen Formeln genügt:

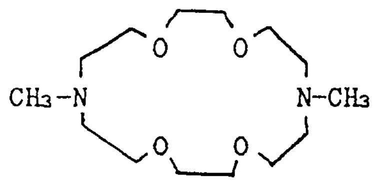

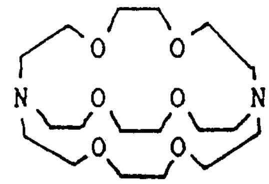

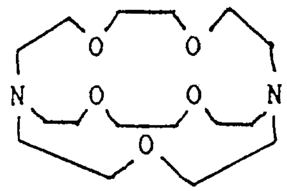

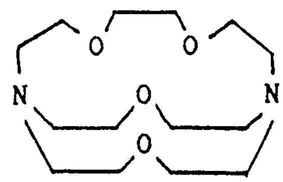

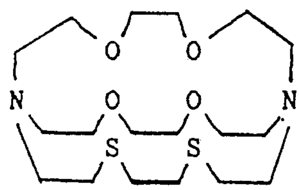

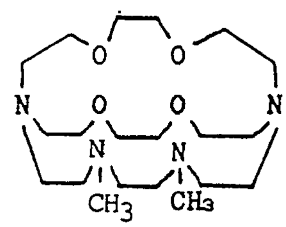

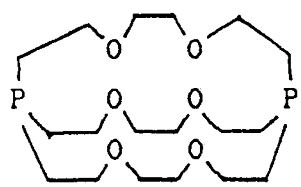

15. Verfahren nach Patentanspruch 10, dadurch gekennzeichnet, daß die gepfropften, der allgemeinen Formel (III) genügenden Komplexbildner aus der Gruppe der Substanzen mit folgenden Formeln gewählt werden:

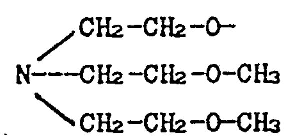

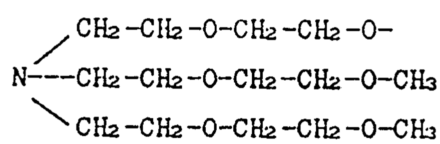

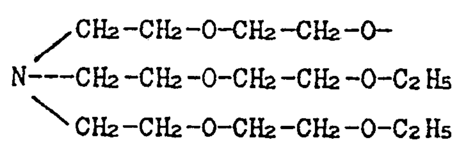

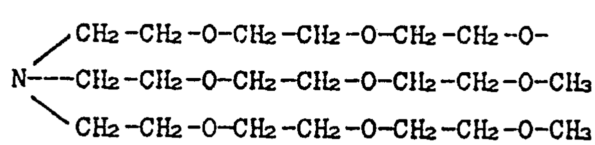

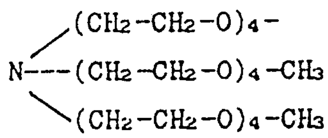

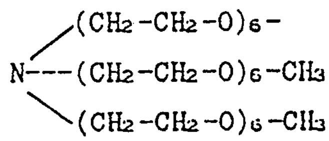

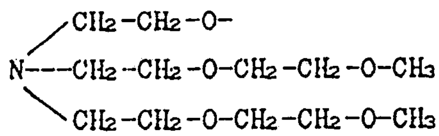

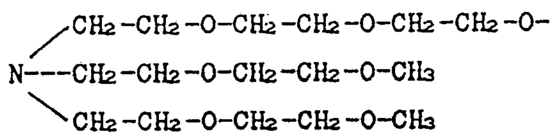

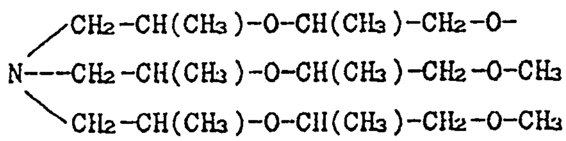

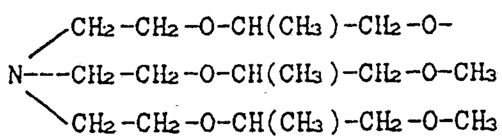

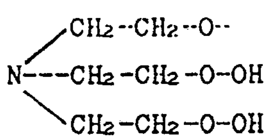

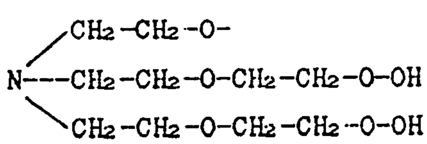

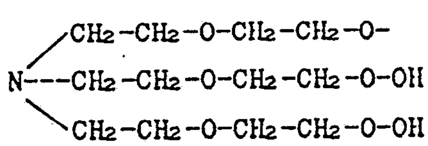

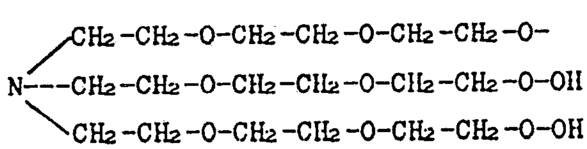

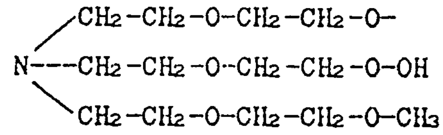

16. Verfahren nach Patentanspruch 10 oder 15, dadurch gekennzeichnet, daß die organischen Polymere unter den von vinylaromatischen Verbindungen wie Styrol und Methylstyrol abgeleiteten Polymeren und den Copolymeren von vinylaromatischen Verbindungen und konjugierten Dienen mit $C_4$ - $C_6$, wie den Copolymeren von Styrol und Butadien und von Styrol und Isopren gewählt werden.

17. Verfahren nach Patentanspruch 1, dadurch gekennzeichnet, daß die erste Stufe bei einer Temperatur zwischen -30°C und dem Siedepunkt des Reaktionsgemisches und vorzugsweise zwischen 15°C und 120°C liegt.

18. Verfahren nach Patentanspruch 1, dadurch gekennzeichnet, daß man den Katalysator in einer solchen Menge anwendet, daß das Molverhältnis von Katalysator (oder seinen aktiven Gruppen im Fall der Ionenaustauscher oder der katalytischen Systeme mit Trägersubstanzen) zu den Ausgangssilanen (Methyldichlorsilan und Trichlorsilan und/oder Tetrachlorsilan) vorzugsweise zwischen 10 und 0,0001 liegt.

19. Verfahren nach Patentanspruch 1, dadurch gekennzeichnet, daß das Molverhältnis von Trichlorsilan und/oder Tetrachlorsilan einerseits zu Methyldichlorsilan andererseits vorzugsweise zwischen 0,05 und 5 liegt.

20. Verfahren nach Patentanspruch 1, dadurch gekennzeichnet, daß die erste und/oder die zweite Stufe in Anwesenheit eines Lösungsmittels ausgeführt werden; das Molverhältnis von dem Lösungsmittel zu der Gesamtheit der Ausgangssilane liegt zwischen 0 und 100 und vorzugsweise zwischen 0 und 10.

21. Verfahren nach Patentanspruch 1, dadurch gekennzeichnet, daß man Dimethylchlorsilan verwendet.

22. Verfahren nach Patentanspruch 1, dadurch gekennzeichnet, daß die Trennung des Dichlorsilans vom Reaktionsgemisch durch Verdampfen und Entfernen desselben, entweder nach und nach während seiner Bildung, oder nach der Neuverteilungsreaktion durch Erhitzen des Reaktionsgemisches ausgeführt wird.

23. Verfahren nach Patentanspruch 1, dadurch gekennzeichnet, daß die zweite Stufe in einer Kolonne ausgeführt wird, in der die Chlorsilane und der Katalysator mit seinem Lösungsmittel im Gegenstrom arbeiten; die Temperatur am oberen Ende der Kolonne liegt zwischen -50° und 120°C und vorzugsweise zwischen -30°C und 40°C, die Temperatur am unteren Ende der Kolonne liegt zwischen 0°C und 120°C und vorzugsweise zwischen 15°C und 60°C, wobei die Temperatur am oberen Ende gleich oder niedriger is, als die Temperatur am unteren Ende.

24. Verfahren nach Patentanspruch 20, dadurch gekennzeichnet, daß das Lösungsmittel eines der folgenden ist: Cyclohexan, Toluol, Benzol, Chlorbenzol, Orthodichlorbenzol, 1,1,2,2,-Tetrachloräthan, Heptan, Dichloräther, Methylenchlorid, Tetrahydrofuran, Dioxan, Dimethoxyäthan.

25. Verfahren nach Patentanspruch 1, dadurch gekennzeichnet, daß der Katalysator in solch einer Menge angewandt wird, daß das Molverhältnis von Katalysator (oder seinen aktiven Gruppen im Fall der Ionenaustauscher und der katalytischen Systeme mit Trägersubstanz) zu Dichlorsilan vorzugsweise zwischen 20 und 0,0002 liegt.

26. Verfahren nach Patentanspruch 1, dadurch gekennzeichnet, daß das Silan gewonnen wird, nachdem es dadurch von eventuellen Chlorsilanrückständen getrennt wurde, daß das gasförmige Silan vom oberen Ende der Kolonne mit einem Lösungsmittel in Berührung gebracht wurde, das die Chlorsilane selektiv solvatisiert, oder durch Verflüssigung der Chlorsilanrückstande durch Abkühlung auf niedrige Temperatur.

**Claims**

1. Process for producing silane from methyldichlorosilane and trichlorosilane and/or tetrachlorosilane, characterized in that:

A) In a first step, redistribution is carried out between methyldichlorosilane and trichlorosilane and/or tetrachlorosilane in the presence of a catalyst to form methyltrichlorosilane and dichlorosilane,

B) in a second step, after separation of the reaction medium, the dichlorosilane formed during the first step is disproportionated in the presence of a catalyst to form silane and trichlorosilane; the silane formed is recovered and the trichlorosilane is recycled, if appropriate, into the first step.

2. Process according to Claim 1, characterized in that the catalyst employed in the first and the second steps, which is identical or different, is chosen from:

- quaternary ammonium salts corresponding to the formula $R_4'NY$ and quaternary phosphonium salts corresponding to the formula $R_4'PY$, formulae in which R', which are identical or different, denote a monovalent hydrocarbon radical and Y a halogen,

- tertiary amines of the general formula NR'R"R''' in which R'R"R''' are monovalent hydrocarbon radicals which are identical or different,

- ion exchange resins containing tertiary amine or quaternary ammonium groups,

- catalytic systems containing an ionic inorganic salt $M^+A^-$ and a compound which complexes the $M^+$ cation of the said salt.

3. Process according to Claim 2, characterized in that the quaternary ammonium salts $R_4'NY$ and the quaternary phosphonium salts $R_4'PY$ are such that R' are identical or different and chosen from the following radicals: methyl, ethyl, isopropyl, butyl, secondary hexyl, 2-ethylhexyl, octadecyl, cyclohexyl, cyclopentyl, vinyl, allyl, hexenyl, cyclopentenyl, butadienyl, phenyl, tolyl, benzyl, diphenyl, naphthyl, 3-chloropropyl, 3,3,3-trifluoropropyl, 4-bromohexyl, bromocyclopentyl, difluorocyclohexyl, chloroallyl, chlorocyclohexenyl, chlorophenyl, dibromophenyl, α,α,α-trifluorotolyl and bromonaphthyl.

4. Process according to Claim 2, characterised in that the tertiary amines are chosen from: tri-n-propylamine, triisopropylamine, diisopropyl-n-ethylamine, tri-n-butylamine, triisobutylamine, tri-sec-butylamine, tri-n-pentylamine, di-n-butylethylamine, diisobutylethylamine, di-2-ethylbutylmethylamine, di-n-octylmethylamine, di-2-ethylhexylmethylamine, dilaurylmethylamine, triundecylamine, trioctadecylamine, n-octadecyl-n-propylethylamine, di-n-butylphenylamine, triphenylamine, tris(biphenyl)amine, 2-naphthyldi-n-butylamine, tritolylamine, trixylylamine, tris(phenylmethylphenyl)amine, tris(2-phenylethyl)amine, tris(8-phenyloctyl)amine, tricyclohexylamine, tricyclooctylamine, tris(4-methylcyclohexyl)amine, tris(2-cyclohexylethyl)amine, tris(3-n-butenyl)amine, triisobutenylamine, diallyl-n-butylamine, N-n-propylpiperidine, N-isobutylpyrrolidine, N-isobutylmorpholine, and the like.

5. Process according to Claim 2, characterized in that the ion exchange resin is insoluble in the products employed in the reaction and comprises tertiary alkylamine groups or quaternary alkylammonium groups in which the alkyl radicals contain from 1 to 8 carbon atoms.

6. Process according to Claim 2, characterized in that the ionic inorganic salt $M^+A^-$ is chosen from those in which $M^+$ denotes an alkali metal, an alkaline-earth metal or ammonium, and preferably: $Li^+$, $Na^+$, $K^+$, $Ca^{++}$, $NH_4^+$ and those in which $A^-$ denotes a halogen, $SCN^-$, $CN^-$, $CO_3^{--}$ and preferably: $Cl^-$, $Br^-$ and $I^-$.

7. Process according to Claim 2, characterized in that the compound which complexes the cation of the ionic inorganic salt is a sequestering agent of formula:

$$[N\text{-}(CHR_1\text{-}CHR_2\text{-}O\text{-}(CHR_3\text{-}CHR_4\text{-}O)_n\text{-}R_5)_3 \qquad (I)$$

in which n is an integer greater than or equal to 0 and smaller than or equal to 10 ($0 \leqslant n \leqslant 10$), $R_1$, $R_2$, $R_3$ and $R_4$, which are identical or different, denote a hydrogen atom or an alkyl radical containing from 1 to 4 carbon atoms and $R_5$ denotes an alkyl or cycloalkyl radical containing from 1 to 12 carbon atoms, a phenyl radical or a $-C_mH_{2m}-\varnothing$ or $C_mH_{2m+1}-\varnothing-$ radical, where m is between 1 and 12 ($1 < m < 12$).

8. Process according to Claim 2, characterized in that the complexing compound is a macrocyclic polyether containing from 15 to 30 atoms in the ring and consisting of 4 to 10 -O-X units in which X is either $-CHR_6-CHR_7-$ or $-CHR_6-CHR_8-CR_9R_7-$, $R_6$, $R_7$, $R_8$ and $R_9$, which are identical or different, being a hydrogen atom or an alkyl radical containing from 1 to 4 carbon atoms, one of the symbols X being capable of being $-CHR_6-CHR_8-CR_9R_7-$ when the -O-X units comprise the group $-O-CHR_6-CHR_7-$.

9. Process according to Claim 2, characterized in that the complexing compound is a macrocyclic or bicyclic compound of general formula IIa or IIb

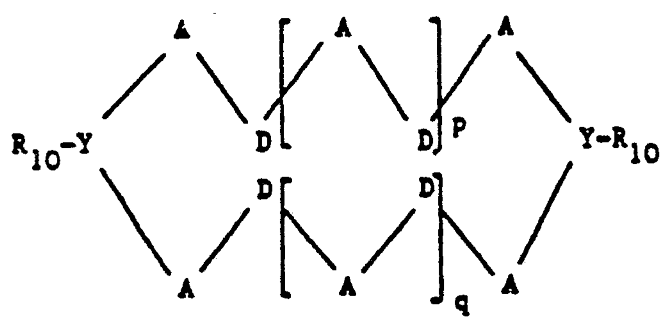

(IIa)

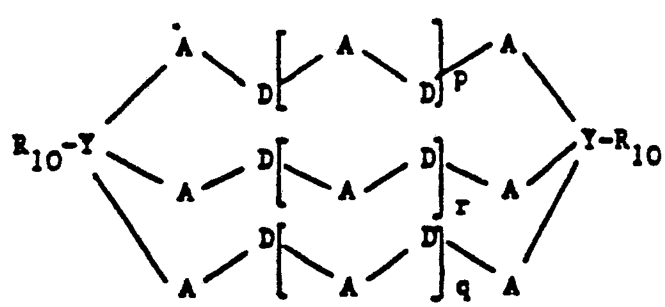

(IIb)

in which:

- Y denotes N or P
- A denotes an alkylene group containing from to 3 carbon atoms
- D denotes O, S or $N-R_{11}$ where $R_{11}$ denotes an alkyl radical containing from 1 to 6 carbon atoms

- $R_{10}$ denotes an alkyl radical containing from 1 to 6 carbon atoms, and p, q and r, which are identical or different, are integers between 1 and 5.

10. Process according to Claim 2, characterized in that the complexing compound is chosen from sequestering agents, macrocyclic polyethers and macrocyclic or bicyclic compounds grafted onto cross-linked organic polymer supports.

11. Process according to Claim 10, characterized in that the grafted sequestering agents consist of a cross-linked organic polymer support and a plurality of functional groups, fixed on the said support, of general formula:

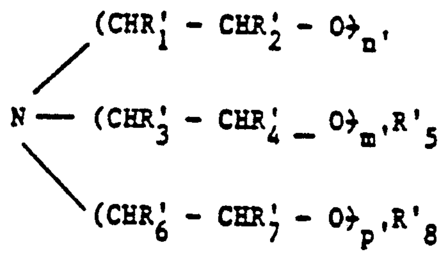

(III)

in which $R_1'$, $R_2'$, $R_3'$, $R_4'$, $R_6'$ and $R_7'$, which are identical or different denote a hydrogen atom, an alkyl or cycloalkyl radical containing from 1 to 12 carbon atoms, a phenyl radical, a $-C_{q'}H_{2q'}-\varnothing Q-$ or $C_{q'}H_{2q'+1}-\varnothing-$ radical with q' greater than or equal to 1 and smaller than or equal to about 12, and in which n', m', and p', which are identical or different, are greater than or equal to 1 and smaller than or equal to 10.

12. Process according to Claim 7, characterized in that the sequestering agent of formula (I) is chosen from:

- tris(3-oxabutyl)amine of the formula:
$N-(-CH_2-CH_2-O-CH_3)_3$
- tris(3,6-dioxaheptyl)amine of the formula:
$N-(-CH_2-CH_2-O-CH_2-CH_2-O-CH_3)_3$
- tris(3,6,9-trioxadecyl)amine of the formula:
$N-(-CH_2-CH_2-O-CH_2-CH_2-O-CH_2-CH_2-O-CH_3)_3$
- tris(3,6-dioxaoctyl)amine of the formula:
$N-(-CH_2-CH_2-O-CH_2-CH_2-O-C_2H_5)_3$
- tris(3,6,9-trioxaundecyl)amine of the formula:
$N-(-CH_2-CH_2-O-CH_2-CH_2-O-CH_2-CH_2-O-C_2H_5)_3$
- tris(3,6-dioxanonyl)amine of the formula:
$N-(-CH_2-CH_2-O-CH_2-CH_2-O-C_3H_7)_3$
- tris(3,6,9-trioxadodecyl)amine of the formula:
$N-(-CH_2-CH_2-O-CH_2-CH_2-O-CH_2-CH_2-O-C_3H_7)_3$
- tris(3,6-dioxadecyl)amine of the formula:
$N-(-CH_2-CH_2-O-CH_2-CH_2-O-C_4H_9)_3$
- tris(3,6,9-trioxatridecyl)amine of the formula:
$N-(-CH_2-CH_2-O-CH_2-CH_2-O-CH_2-CH_2-O-C_4H_9)_3$
- tris(3,6,9,12-tetraoxatridecyl)amine of the formula:
$N-(-CH_2-CH_2-O-(-CH_2-CH_2-O-)_3-CH_3)_3$
- tris(3,6,9,12,15,18-hexaoxanonadecyl)amine of the formula:
$N-(-CH_2-CH_2-O-(CH_2-CH_2-O)_5CH_3)_3$
- tris(3,6-dioxa-4-methylheptyl)amine of the formula:
$N-(-CH_2-CH_2-OCH-(CH_3)-CH_2-O-CH_3)_3$
- tris(3,6-dioxa-2,4-dimethylheptyl)amine of the formula:
$N-(-CH_2-CH(CH_3)-OCH(CH_3)-CH_2-O-CH_3)_3$.

13. Process according to Claim 8, characterized in that the macrocyclic polyether is chosen from the compounds of general formula:

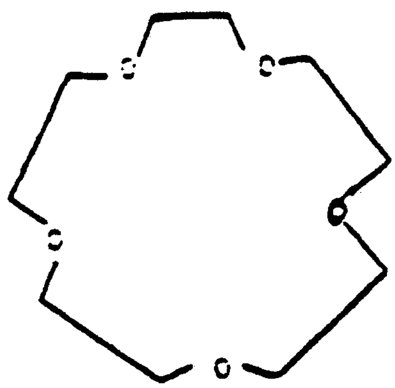

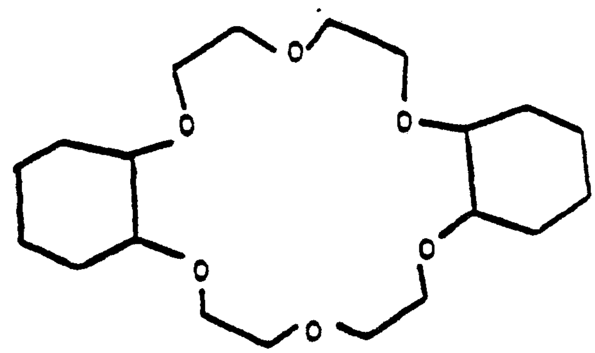

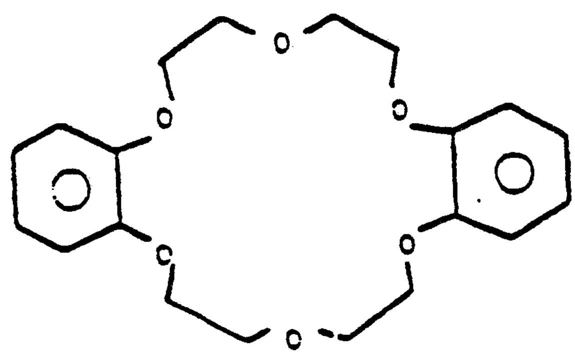

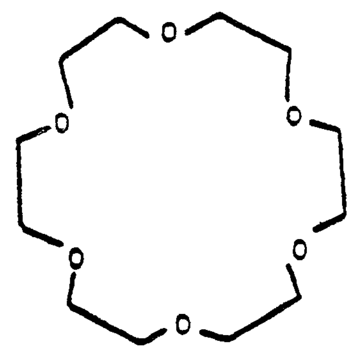

14. Process according to Claim 9, characterized in that the macrocyclic or bicyclic compound is chosen from the compounds of general formula:

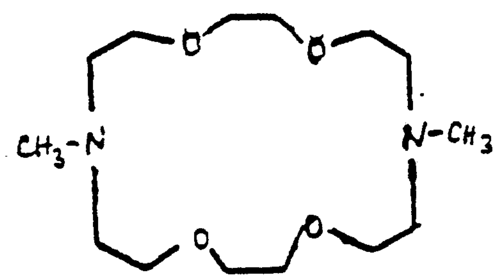

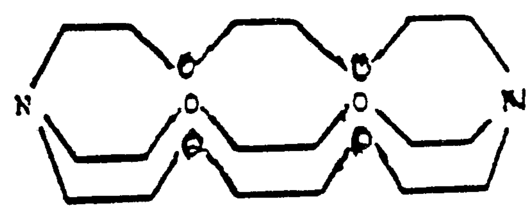

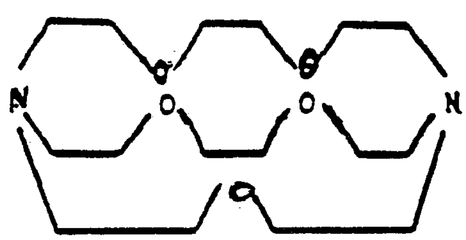

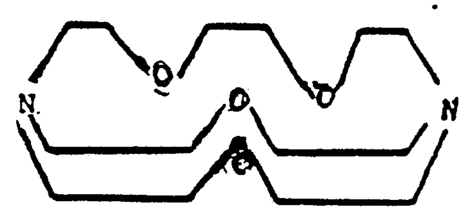

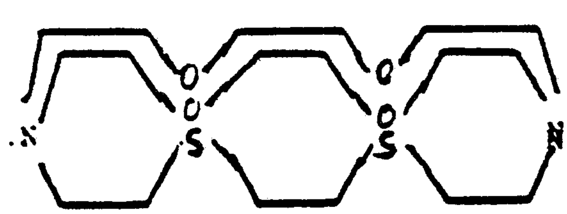

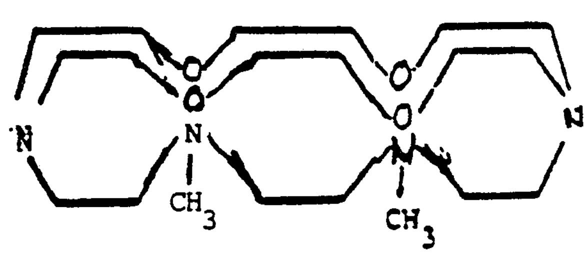

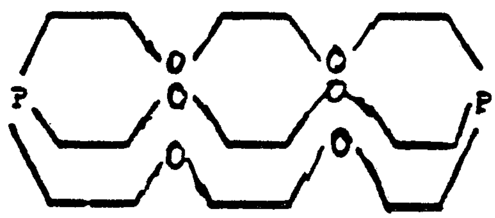

15. Process according to Claim 10, characterized in that the grafted sequestering agents are such that the functional groups of the general formula (III) are chosen from the groups of the following formulae:

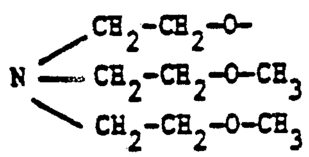

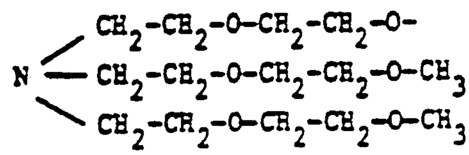

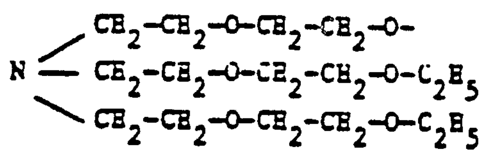

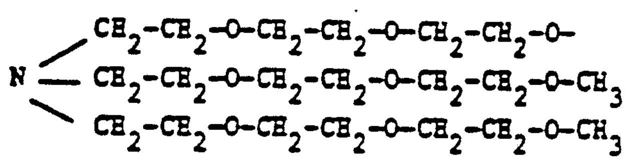

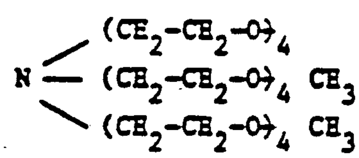

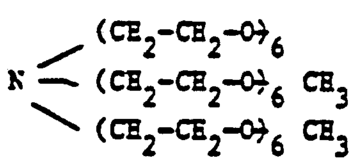

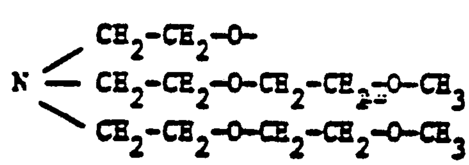

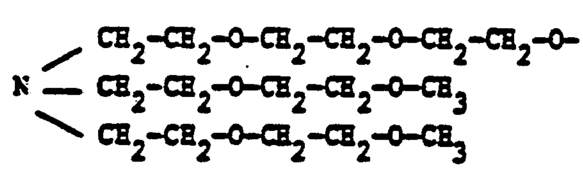

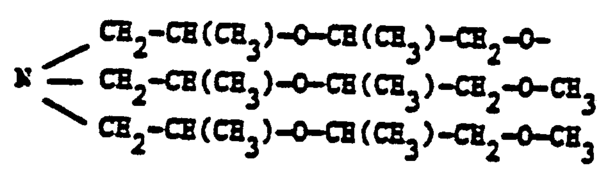

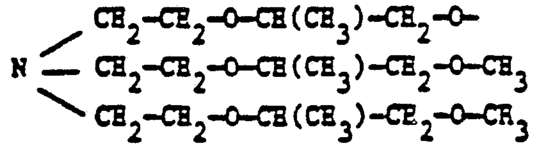

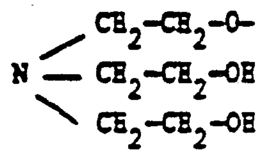

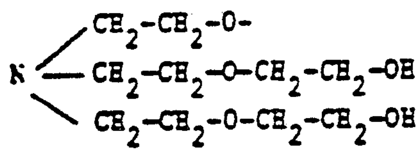

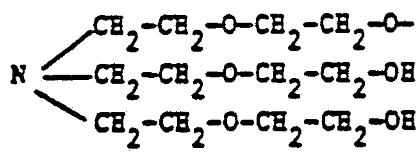

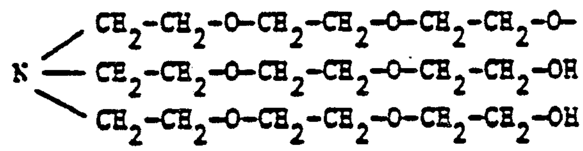

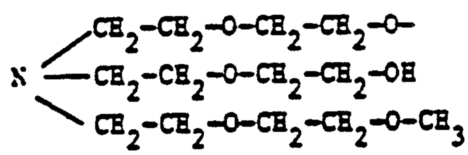

16. Process according to Claim 10 or 15, characterized in that the organic polymers are chosen from the polymers derived from vinylaromatic compounds such as styrene and methylstyrene and copolymers of vinylaromatic compounds with $C_4$ - $C_6$ conjugated dienes such as copolymers of styrene with butadiene and styrene with isoprene.

17. Process according to Claim 1, characterized in that the temperature at which the first step is carried out is between -30°C and the boiling temperature of the reaction medium, and preferably between 15°C and 120°C.

18. Process according to Claim 1, characterized in that the catalyst is used in a quantity such that the molar ratio of the catalyst (or the active groups of the latter in the case of resins or supported catalytic systems) to the original silanes (methyldichlorosilane and trichlorosilane and/or tetrachlorosilane) is preferably between 10 and 0.0001.

19. Process according to Claim 1, characterized in that the molar ratio of, on the one hand, trichlorosilane and/or tetrachlorosilane to, on the other hand, methyldichlorosilane is preferably between 0.05 and 5.

20. Process according to Claim 1, characterized in that the first and/or the second step are carried out in the presence of a solvent; the molar ratio of the solvent to all of the original silanes is between 0 and 100 and preferably between 0 and 10.

21. Process according to Claim 1, characterized in that dimethylchlorosilane is caused to react.

22. Process according to Claim 1, characterized in that the separation of dichlorosilane from the reaction medium is carried out by vaporising and removing the latter, either as it is formed, or after the redistribution by heating the reaction medium.

23. Process according to Claim 1, characterized in that the second step is carried out in a column in which the chlorosilanes and the catalyst and its solvent operate countercurrentwise; the temperature at the head of the column is between -50°C and 120°C and preferably between -30°C and 40°C, the temperature at the bottom of the column is between 0°C and 120°C and preferably between 15°C and 60°C, the temperature at the head

being lower than or equal to the temperature at the bottom.

24. Process according to Claim 20, characterized in that the solvent is chosen from cyclohexane, toluene, benzene, chlorobenzene, ortho-dichlorobenzene, 1,1,2,2-tetrachloroethane, heptane, dichloroether, methylene chloride, tetrahydrofuran, dioxane, and dimethoxyethane.

25. Process according to Claim 1, characterized in that the catalyst is employed in a quantity such that the molar ratio of the catalyst (or the active groups of the latter in the case of resins or supported catalytic systems) to dichlorosilane is preferably between 20 and 0.0002.

26. Process according to Claim 1, characterized in that silane is recovered after separation of possible residual chlorosilanes by contacting gaseous silane originating from the head of the column with a solvent effecting selective solvation of chlorosilanes or by liquefying residual chlorosilanes by cooling to a low temperature.

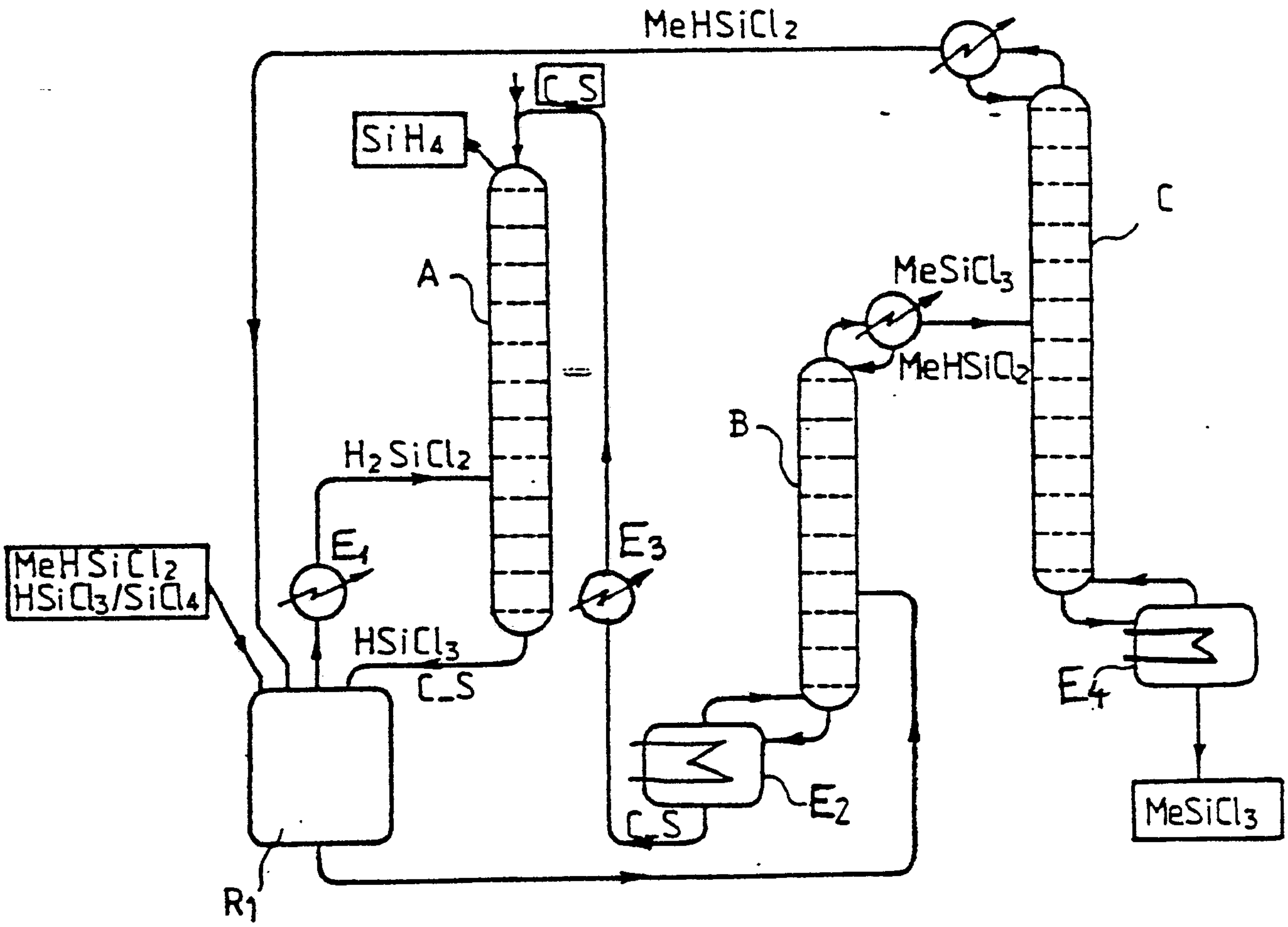
MeHSiCl2
C_S
SiH4
A
C
MeSiCl3
MeHSiCl2
B
H2SiCl2
MeHSiCl2
HSiCl3/SiCl4
E1
E3
HSiCl3
C_S
E4
E2
C_S
MeSiCl3
R1